# EUROPEAN PATENT APPLICATION

(11) **EP 4 290 388 A1**
(43) Date of publication of application: **13.12.2023**
(21) Application number: 21924510.7
(22) Date of filing: 04.02.2021
(51) Int. Cl.: G06F 13/00

(54) **NETWORK SERVICE MANAGEMENT SYSTEM AND NETWORK SERVICE MANAGEMENT METHOD**

(71) Applicant: Rakuten Symphony Singapore Pte. Ltd., Capitagreen 048946 (SG)
(72) Inventor: TAKEUCHI, Kazushige, Tokyo 158-0094 (JP); KITA, Shinya, Tokyo 158-0094 (JP); PATHAK, Mihir, Tokyo 158-0094 (JP); SADEGHIAN, Mehdi, Tokyo 158-0094 (JP); WADEKAR, Amey, Tokyo 158-0094 (JP); WAGH, Yash, Tokyo 158-0094 (JP)
(74) Representative: Betten & Resch
(86) International application number: PCT/IB2021/050887
(87) International publication number: WO 2022/167837

(57) **Abstract**

A CMaaS unit 68 stores a file defining the details of setting for a network apparatus for achieving a network service available to a user for purchase, in association with the network service. A front-end system 112 receives a request for the network service from the customer. The front-end system 112 provides a user terminal 120 with a setting screen for the network apparatus based on the details defined the file stored in the CMaaS unit 68. On the basis of a set value input on the setting screen by the user, the CMaaS unit 68 performs setting to the network apparatus (e.g., a CNF 116).

## Description

### [TECHNICAL FIELD]

The present disclosure relates to a data processing technology and relates particularly to a network service management system and a network service management method.

### [BACKGROUND ART]

As an exemplary technology regarding deployment of a functional unit appropriate to purchase of a network service, Patent Literature 1 discloses a technology in which the order of a product purchased by a customer is divided in units of virtualized network functions (VNFs) for deployment on a network functions virtualization infrastructure (NFVI).

Patent Literature 2 discloses a technology in which, in order to meet an isolation requirement as a requirement regarding non-sharing, in response to a deployment request, a network functional unit is deployed in an available calculation apparatus.

Patent Literature 3 discloses a technology enabling a plurality of business operators to utilize, originally, the entirety or part of a plurality of network slices managed by a host business operator.

### [CITATION LIST]

### [Patent Literature]

[Patent Literature 1] WO 2018/181826 A
[Patent Literature 2] WO 2019/64678 A
[Patent Literature 3] WO 2018/34321 A

### [SUMMARY OF INVENTION]

### [TECHNICAL PROBLEM]

There are various needs for a network service, such as the configuration, scale, and target area of the network service. However, even with the technology disclosed in Patent Literature 1, Patent Literature 2, or Patent Literature 3, a network service appropriate to various needs is difficult to construct flexibly.

The present disclosure has been made in consideration of such a problem as above, and an object of the present disclosure is to provide a technology enabling flexible construction of a network service appropriate to various needs.

### [SOLUTION TO PROBLEM]

In order to solve such a problem as above, according to an aspect of the present disclosure, provided is a network service management system including: a storage structured to store a file defining a detail of setting for a network apparatus for achieving a network service available to a customer for purchase, in association with the network service; a receptor structured to receive a request for the network service from the customer; a setting screen provider structured to provide a terminal of the customer with a setting screen for the network apparatus, based on the detail defined in the file; and an apparatus setter structured to perform, based on a set value for the network apparatus input on the setting screen by the customer, setting to the network apparatus.

According to another aspect of the present disclosure, provided is a network service management method to be performed by a computer including a storage structured to store a file defining a detail of setting for a network apparatus for achieving a network service available to a customer for purchase, in association with the network service. The method includes: a step of receiving a request for the network service from the customer; a step of providing a terminal of the customer with a setting screen for the network apparatus, based on the detail defined in the file; and a step of performing, based on a set value for the network apparatus input on the setting screen by the customer, setting to the network apparatus.

Note that any combination of the constituent elements and replacements of expression between an apparatus, a computer program, and a computer-readable storage medium storing the computer program in the present disclosure are effective as aspects of the present disclosure.

### [ADVANTAGEOUS EFFECTS OF INVENTION]

The present disclosure enables assistance to flexible construction of a network service appropriate to various needs.

### [BRIEF DESCRIPTION OF DRAWINGS]

Fig. 1 illustrates an exemplary computer network according to an embodiment of the present invention.
Fig. 2 schematically illustrates an exemplary of purchase screen.
Fig. 3 illustrates an exemplary of service-requirement input screen.
Fig. 4 illustrates an exemplary of purchase confirmation screen.
Fig. 5 illustrates an exemplary of purchase confirmation screen.
Fig. 6 illustrates an exemplary of data structure of a bundle file.
Fig. 7 illustrates an exemplary of onboarding screen.
Fig. 8 is a functional block diagram of exemplary functions implemented on an MPS and an NOS according to the embodiment of the present invention.
Fig. 9 illustrates an exemplary of data structure of a cluster of pieces of data generated on the basis of the bundle file.
Fig. 10 illustrates an exemplary of data structure of physical inventory data.
Fig. 11 schematically illustrates an exemplary of data structure of logical inventory data.
Fig. 12 illustrates exemplary of resource management data.
Fig. 13 illustrates an exemplary of data structure of planned data.
Fig. 14 schematically illustrates of exemplary planned data.
Fig. 15 illustrates exemplary of estimated busy level data.
Fig. 16 illustrates exemplary resource management data.
Fig. 17 illustrates an exemplary of CNFD.
Fig. 18 illustrates an exemplary day0 parameter.
Fig. 19A is a flowchart of an exemplary flow of processing that is performed between a vendor terminal, the MPS, and the NOS according to the embodiment of the present invention.
Fig. 19B is a flowchart of an exemplary flow of processing that is performed between the vendor terminal, the MPS, and the NOS according to the embodiment of the present invention.
Fig. 20 is a flowchart of an exemplary flow of processing that is performed between a purchaser terminal, the MPS, and the NOS according to the embodiment of the present invention.
Fig. 21 is a flowchart of an exemplary flow of processing that is performed between the purchaser terminal, the MPS, and the NOS according to the embodiment of the present invention.
Fig. 22A is a flowchart of an exemplary flow of processing that is performed in the NOS according to the embodiment of the present invention.
Fig. 22B is a flowchart of an exemplary flow of processing that is performed in the NOS according to the embodiment of the present invention.
Fig. 22C is a flowchart of an exemplary flow of processing that is performed in the NOS according to the embodiment of the present invention.
Fig. 22D is a flowchart of an exemplary flow of processing that is performed in the NOS according to the embodiment of the present invention.
Fig. 22E is a flowchart of an exemplary flow of processing that is performed in the NOS according to the embodiment of the present invention.
Fig. 22F is a flowchart of an exemplary flow of processing that is performed in the NOS according to the embodiment of the present invention.
Fig. 22G is a flowchart of an exemplary flow of processing that is performed in the NOS according to the embodiment of the present invention.
Fig. 23 illustrates exemplary data of a YANG model.
Fig. 24 illustrates the configuration of a communication platform according to an example.
Fig. 25 is a sequence diagram of the operation of the communication platform.
Fig. 26 schematically illustrates service data stored in a CMaaS unit.
Fig. 27 illustrates an exemplary setting screen.
Fig. 28 schematically illustrates user data stored in the CMaaS unit.
Fig. 29 is a sequence diagram of the operation of the communication platform.

### [DESCRIPTION OF EMBODIMENTS]

### Fundamental Technology

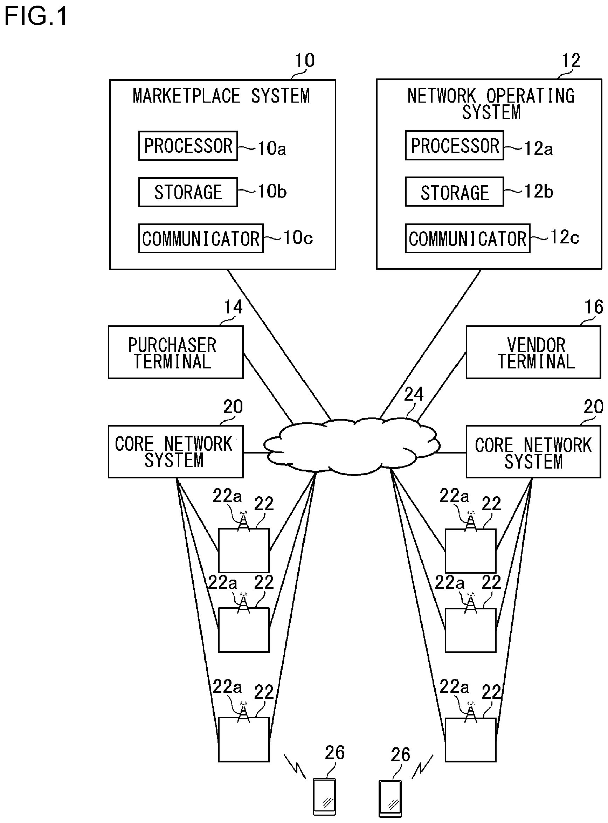

A fundamental technology for some examples will be described in detail with reference to Figs. 1 to 22G.

Fig. 1 illustrates an exemplary of computer network 24 according to an embodiment of the present invention. As illustrated in Fig. 1, in the present embodiment, the computer network 24, such as the Internet, is in connection with a marketplace system (MPS) 10, a network operating system (NOS) 12, a purchaser terminal 14, a vendor terminal 16, a plurality of core network systems 20, and a plurality of base-station apparatuses 22.

The core network systems 20 each correspond to an evolved packet core (EPC) in the 4th generation mobile communication system (hereinafter, referred to as 4G) or correspond to a 5G core network (5GC) including an access and mobility management function (AMF), a session management function (SMF), and a user plane function (UPF) in the 5th generation mobile communication system (hereinafter, referred to as 5G). Each core network system 20 according to the present embodiment has, implemented therein, a cluster of servers disposed in a plurality of data centers provided at various locations. A plurality of servers is disposed in each data center. Note that, although two core network systems 20 are illustrated in Fig. 1, the number of core network systems 20 according to the present embodiment is not limited to two, and thus may be one or three or more.

The base-station apparatuses 22 each serve as a computer system that has an antenna 22a and corresponds to an eNodeB (eNB) in 4G or a NR base station (gNB) in 5G. Each base-station apparatus 22 according to the present embodiment includes a single server or a plurality of servers. Note that the base-station apparatuses 22 each may have, implemented therein, a cluster of servers disposed in a data center.

A virtual DU (vDU) or a virtual CU (vCU) as a constituent element in a radio access network (R_AN) in 4G may be disposed in each base-station apparatus 22 or may be incorporated in part of each core network system 20. Similarly, a DU or a CU as a constituent element in a RAN in 5G may be disposed in each base-station apparatus 22 or may be incorporated in part of each core network system 20.

For example, the MPS 10 according to the present embodiment is provided on a cloud infrastructure and incudes, as illustrated in Fig. 1, a processor 10a, a storage 10b, and a communicator 10c. The processor 10a serves as a program-controlled device, such as a microprocessor, that operates in accordance with a program installed in the MPS 10. Examples of the storage 10b include a storage element, such as a ROM or a RAM, a solid-state drive (SSD), and a hard disk drive (HDD). For example, a program to be executed by the processor 10a is stored in the storage 10b. The communicator 10c serves as a communication interface, such as a network interface card (NIC) or a wireless LAN module. The communicator 10c transmits data to or receives data from the NOS 12 or the purchaser terminal 14 through the computer network 24.

For example, the NOS 12 according to the present embodiment is provided on a cloud infrastructure and includes, as illustrated in Fig. 1, a processor 12a, a storage 12b, and a communicator 12c. The processor 12a serves as a program-controlled device, such as a microprocessor, that operates in accordance with a program installed in the NOS 12. Examples of the storage 12b include a storage element, such as a ROM or a R_AM, a solid-state drive (SSD), and a hard disk drive (HDD). For example, a program to be executed by the processor 12a is stored in the storage 12b. The communicator 12c serves as a communication interface, such as a NIC or a wireless LAN module. The communicator 12c transmits data to or receives data from the NPS 10, the purchaser terminal 14, the vendor terminal 16, each core network system 20, or each base-station apparatus 22 through the computer network 24.

In the present embodiment, in response to a purchase request for a network service from a purchaser, the network service corresponding to the purchase request is constructed in each core network system 20 and each base-station apparatus 22. Then, the constructed network service is provided to the purchaser.

For example, the purchaser as a mobile virtual network operator (MVNO) is provided with a network service, such as a voice communication service or a data communication service. The voice communication service or the data communication service provided in the present embodiment is finally provided to customers (end users) for the purchaser (MVNO in the above example) who each utilize user equipment (UE) 26 illustrated in Fig. 1. The end users each can perform voice communication or data communication with another user through a core network system 20 or a base-station apparatus 22.

A network service available for provision in the present embodiment is not limited to such a voice communication service or data communication service. For example, a network service available for provision in the present embodiment may be an IoT service. Then, for example, an end user who utilizes a robot arm or an end user who utilizes a connected car may be a purchaser for a network service according to the present embodiment.

In the present embodiment, each server disposed in the core network systems 20 and the base-station apparatuses 22 has, installed therein, a container-based application execution environment, such as docker, so that each server can operate with a container deployed. Then, the network service to be provided to the purchaser in the present embodiment is implemented with a cloud-native network function (CNF) that is a container-based functional unit.

For example, the purchaser terminal 14 according to the present embodiment corresponds to a general-purpose computer, such as a smartphone, a tablet terminal, or a personal computer, that the purchaser described above utilizes.

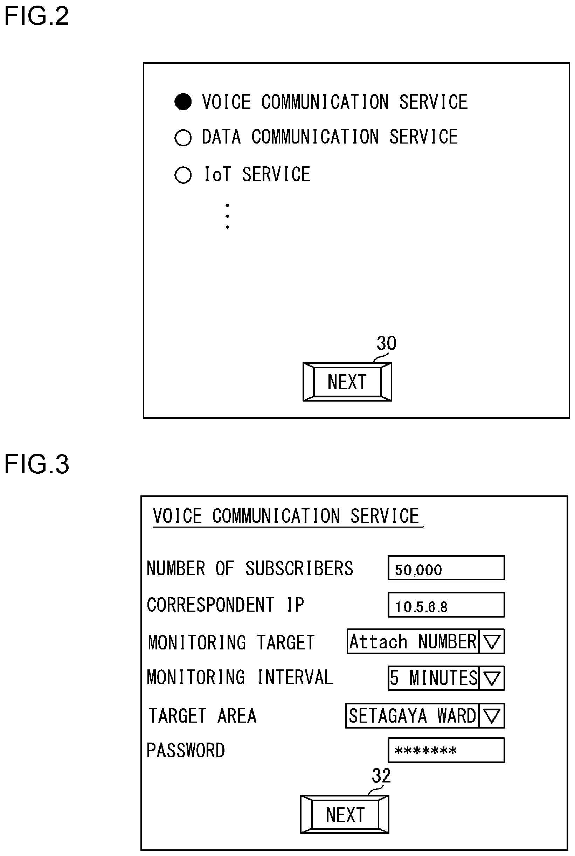

Fig. 2 illustrates an exemplary of purchase screen displayed on the purchaser terminal 14 according to the present embodiment. The purchase screen illustrated in Fig. 2 enables the purchaser to select, with a radio button, a type of network service to be purchased. Here, when the purchaser clicks on a next button 30 after designating the voice communication service, a service-requirement input screen illustrated in Fig. 3 is displayed on the purchaser terminal 14.

The service-requirement input screen enables the purchaser to input service requirements for the network service to be purchased. In the example of Fig. 3, setting can be performed in the number of subscribers, correspondent IP, monitoring target, monitoring interval, target area, and password. Note that the correspondent IP indicates the IP address of an access point to the network system that the purchaser has already possessed.

When the purchaser clicks on a next button 32 after inputting such service requirements, service-requirement data linked with the input to the service-requirement input screen is transmitted to the MPS 10.

For example, the service-requirement data includes subscriber-number data indicating the number of subscribers, correspondent IP data indicating the correspondent IP, monitoring target data indicating the monitoring target, monitoring interval data indicating the interval of monitoring of the monitoring target, target area data indicating the target area of the network service to be purchased, and password data indicating the password. Note that the service-requirement data does not necessarily include all the pieces of data or may include data indicating a requirement different from those of the above pieces of data.

Then, on the basis of the service-requirement data, the MPS 10 in cooperation with the NOS 12 checks whether or not a server meeting the service requirements indicated in the service-requirement data can be secured. Herein, for example, it is determined (1) that a server meeting the service requirements can be secured, (2) that a server meeting the service requirements can be secured due to setup of a free server, or (3) that no server meeting the service requirements can be secured.

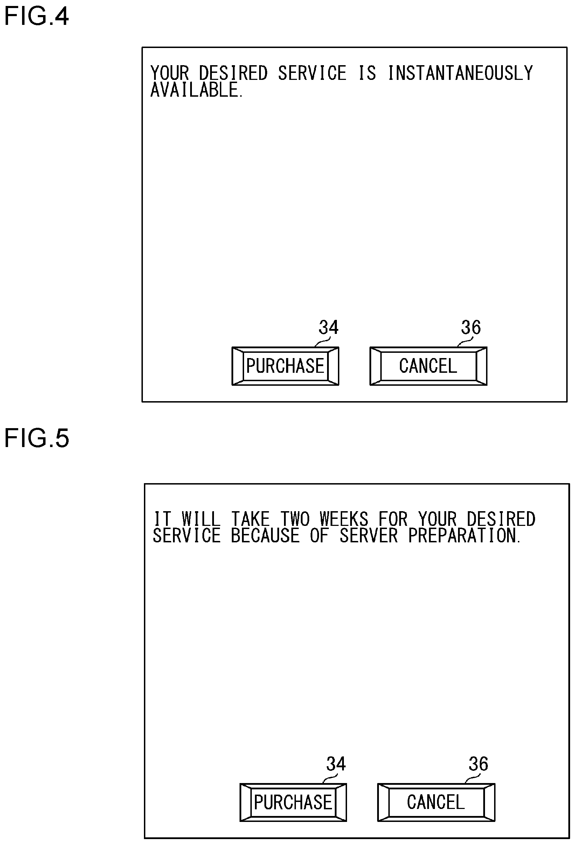

Then, in a case where (1) or (2) results from the determination, a purchase confirmation screen indicating that an instant provision can be made, illustrated in Fig. 4, is displayed on the purchaser terminal 14. In a case where (3) results from the determination, a purchase confirmation screen indicating that it will take a predetermined period for provision (for example, it will take two weeks for provision), illustrated in Fig. 5, is displayed on the purchaser terminal 14.

Here, when the purchaser clicks on a purchase button 34 illustrated in Fig. 4 or 5, the network service corresponding to the purchase request is constructed and then is provided to the purchaser.

Meanwhile, when the purchaser clicks on a cancel button 36 illustrated in Fig. 4 or 5, the purchase is canceled.

As above, according to the present embodiment, the network service appropriate to various needs from the purchaser is constructed flexibly. Without considering sophisticated implementation of a network service, the purchaser simply designates some service requirements, so that a desired network service can be provided.

The vendor terminal 16 according to the present embodiment corresponds to a general-purpose computer, such as a smartphone, a tablet terminal, or a personal computer, that a vendor, such as a service provider regarding network services, utilizes.

In the present embodiment, the vendor is provided with a continuous integration (CI)/continuous delivery (CD) pipeline including a development environment, a verification environment, and an examination environment. Then, in the present embodiment, in an onboarding process with the CI/CD pipeline, a verified bundle file, corresponding to the network service as the provision target to the purchaser, created by the vendor is subjected to onboarding.

The bundle file according to the present embodiment is, for example, a compressed file of a cluster of files in a predetermined directory configuration (e.g., a targz-format file).

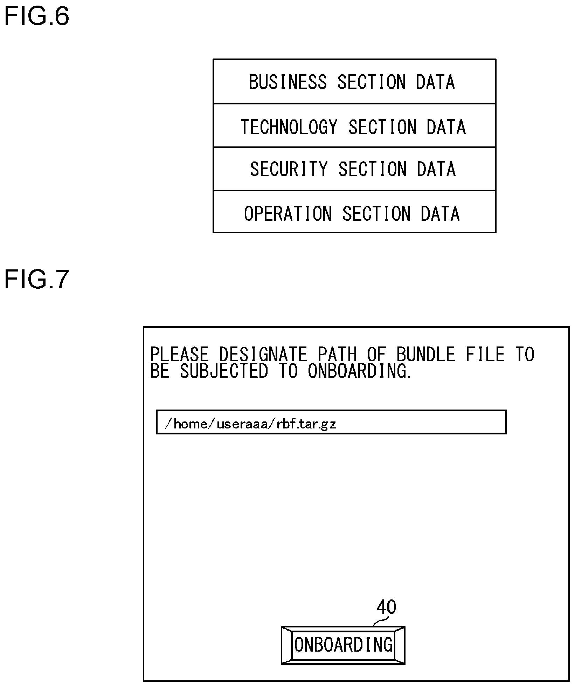

Fig. 6 illustrates an exemplary of data structure of the bundle file according to the present embodiment. As illustrated in Fig. 6, the bundle file according to the present embodiment includes business section data, technology section data, security section data, and operation section data.

For example, the business section data indicates business requirements for the network service, such as the name of the network service, license requirements, and the definition of service-level agreement (SLA). The business section data according to the present embodiment includes data indicating the mandatory input items and optional input items regarding service requirements for the network service.

For example, the technology section data indicates the configuration of a cluster of functional units for achievement of the network service. For example, the technology section data indicates the configuration of an application or the configuration of a CNF included in the network service.

For example, the security section data indicates the security definition of the network service, such as installation qualification information.

For example, the operation section data indicates monitoring policies regarding the network service, such as the metric for the monitoring target and the monitoring interval.

Fig. 7 illustrates an exemplary of onboarding screen displayed on the vendor terminal 16 according to the present embodiment. In the present embodiment, when the vendor clicks on an onboarding button 40 after designating the path at which a bundle file is disposed, the bundle file is subjected to onboarding.

As above, according to the present embodiment, without considering the actual location at which a cluster of files developed is subjected to onboarding, the vendor can simply perform onboarding of the network service.

The functions of the MPS 10 and the NOS 12 according to the present embodiment and processing that is performed in the MPS 10 and the NOS 12 will be further described below.

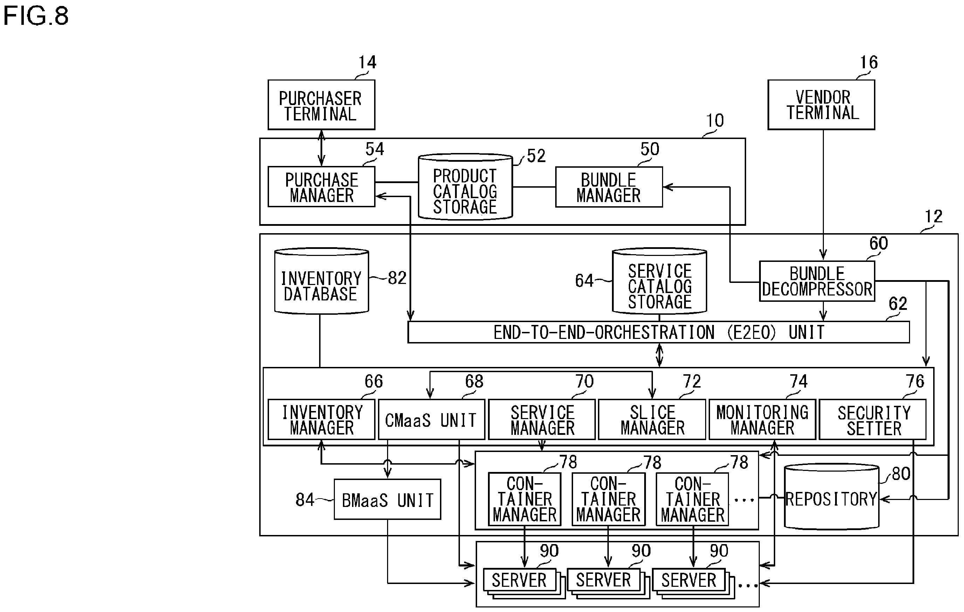

Fig. 8 is a functional block diagram of exemplary functions implemented on the MPS 10 and the NOS 12 according to the present embodiment. Note that the MPS 10 and the NOS 12 according to the present embodiment do not necessarily have all the functions illustrated in Fig. 8 implemented thereon, or may have functions different from the functions illustrated in Fig. 8 implemented thereon.

As illustrated in Fig. 8, for example, functionally, the MPS 10 includes a bundle manager 50, a product catalog storage 52, and a purchase manager 54.

Mainly, the bundle manager 50 and the purchase manager 54 are implemented on the processor 10a and the communicator 10c. Mainly, the product catalog storage 52 is implemented on the storage 10b.

The above functions may be implemented due to execution of a program including commands corresponding to the above functions, installed in the MPS 10 as a computer, by the processor 10a. For example, the program may be provided to the MPS 10 through a computer-readable information storage medium, such as an optical disc, a magnetic disk, a magnetic tape, a magneto-optical disc, or a flash memory, or through the Internet.

As illustrated in Fig. 8, for example, functionally, the NOS 12 includes a bundle decompressor 60, an end-to-end-orchestration (E2EO) unit 62, a service catalog storage 64, an inventory manager 66, a configuration management as a service (CMaaS) unit 68, a service manager 70, a slice manager 72, a monitoring manager 74, a security setter 76, a plurality of container managers 78, a repository 80, an inventory database 82, and a bare metal as a service (BMaaS) unit 84.

Mainly, the bundle decompressor 60 and the E2EO unit 62 are implemented on the processor 12a and the communicator 12c. Mainly, the service catalog storage 64, the repository 80, and the inventory database 82 are implemented on the storage 12b. Mainly, the inventory manager 66, the CMaaS unit 68, the service manager 70, the slice manager 72, the monitoring manager 74, the security setter 76, and the container managers 78 are implemented on the processor 12a and the storage 12b. Mainly, the BMaaS unit 84 is implemented on the processor 12a.

The above functions may be implemented due to execution of a program including commands corresponding to the above functions, installed in the NOS 12 as a computer, by the processor 12a. For example, the program may be provided to the NOS 12 through a computer-readable information storage medium, such as an optical disc, a magnetic disk, a magnetic tape, a magneto-optical disc, or a flash memory, or through the Internet.

Referring to Fig. 8, illustrated is a plurality of servers 90 distributed and disposed at various locations, included in the core network systems 20 and the base-station apparatuses 22 illustrated in Fig. 1. Then, each of the plurality of container managers 78 according to the present embodiment is linked with a cluster of servers as part of the plurality of servers 90.

Each of the plurality of container managers 78 according to the present embodiment has a container management tool, such as Kubernetes, and a package manager, such as Helm, installed therein. Then, the container managers 78 each perform, to the cluster of servers (a plurality of servers 90) linked with the container manager 78, life cycle management of a container including construction of a container, such as deployment or setting of a container.

Note that the container managers 78 are not necessarily included in the NOS 12. For example, the container managers 78 each may be provided at the servers 90 (namely, the core network system 20 or the base-station apparatus 22) managed by the container manager 78 or may be provided at a server provided together with the servers 90.

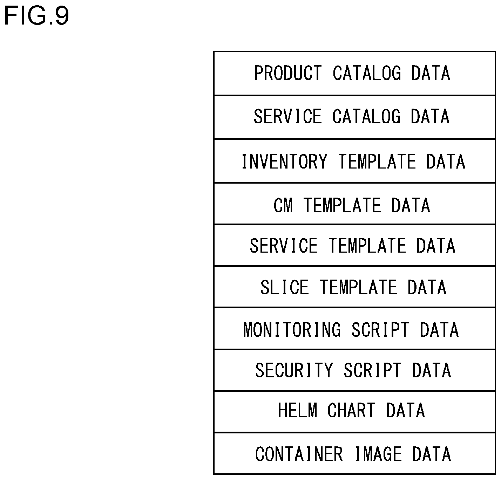

In the present embodiment, for example, the bundle decompressor 60 receives the bundle file from the vendor terminal 16. Then, in the present embodiment, for example, on the basis of the received bundle file, the bundle decompressor 60 generates a cluster of pieces of data having a data structure illustrated in Fig. 9. The cluster of pieces of data illustrated in Fig. 9 results from reconfiguration of the details of the bundle file received by the bundle decompressor 60.

As illustrated in Fig. 9, the cluster of pieces of data generated by the bundle decompressor 60 includes product catalog data, service catalog data, inventory template data, CM template data, service template data, slice template data, monitoring script data, security script data, helm chart data, and container image data.

For example, the product catalog data corresponds to the business section data included in the bundle file. The product catalog data indicates information regarding business requirements for the network service, such as the name of the network service to be displayed on the purchase screen illustrated in Fig. 2 described above, license requirements, and the definition of service-level agreement (SLA) .

The product catalog data according to the present embodiment includes data indicating the mandatory input items and optional input items regarding service requirements for the network service. In the present embodiment, for example, on the basis of the product catalog data, the purchase screen illustrated in Fig. 2 and the service-requirement input screen illustrated in Fig. 3 are generated.

For example, the service catalog data corresponds to part of the technology section data included in the bundle file. The service catalog data includes a script of workflow for construction of the network service.

The service catalog data may include requirement-configuration correspondence data indicating the correspondence between the value in the service-requirement data described above and the configuration of a cluster of functional units (e.g., a cluster of CNFs) to be constructed in response to the purchase request.

For example, the service catalog data may include requirement-configuration correspondence data indicating the correspondence between the value in the service-requirement data, the types of clusters of functional units, and the number of functional units in each type. For example, the requirement-configuration correspondence data may indicate the correspondence "the number of subscribers: 20000 and a single packet data network gateway (P-GW)", the correspondence "the number of subscribers: 20000 and a single IP multimedia system (IMS)", and the correspondence "the number of subscribers: 20000 and a single home subscriber server (HSS)". Note that the service-requirement data is not limited to being linked with the types of constituent elements or the number of constituent elements in 4G and thus may be linked with the types of constituent elements or the number of constituent elements in 5G.

For example, the requirement-configuration correspondence data may indicate the correspondence between the value in the service-requirement data and the location of construction of each functional unit included in the cluster of functional units to be constructed in response to the purchase request. In this case, the location linked with the value in the service-requirement data in the requirement-configuration correspondence data may vary between the functional units included in the cluster of functional units to be constructed.

For example, the inventory template data corresponds to part of the technology section data and part of the security section data included in the bundle file. For example, the inventory template data indicates logic that the inventory manager 66 utilizes.

For example, the CM template data corresponds to part of the technology section data and part of the operation section data included in the bundle file. For example, the CM template data indicates logic that the CMaaS unit 68 utilizes.

For example, the service template data corresponds to part of the technology section data included in the bundle file. For example, the service template data indicates logic that the service manager 70 utilizes.

For example, the slice template data corresponds to part of the technology section data included in the bundle file. For example, the slice template data indicates logic that the slice manager 72 utilizes.

For example, the monitoring script data corresponds to part of the operation section data included in the bundle file. For example, the monitoring script data indicates a monitoring script that the monitoring manager 74 executes.

For example, the security script data corresponds to part of the security section data included in the bundle file. For example, the security script data indicates a script regarding security that the security setter 76 executes.

For example, the helm chart data corresponds to part of the operation section data included in the bundle file and indicates a script template (helm chart) that each container manager 78 utilizes.

For example, the container image data corresponds to part of the operation section data included in the bundle file. For example, the container image data indicates a container image regarding a container included in the cluster of functional units for achievement of the network service. The container image data includes a single container image or a plurality of container images. The single container or the plurality of container images is each associated with a container image ID as the identifier of the container image.

In the present embodiment, in response to reception of the bundle file, the bundle decompressor 60 determines a bundle ID corresponding to a cluster of pieces of data generated on the basis of the bundle file. Such a bundle ID is uniquely allocated every cluster of pieces of data generated.

Then, the bundle decompressor 60 transmits, to the MPS 10, the product catalog data included in the cluster of pieces of data corresponding to the bundle ID, in association with the bundle ID determined.

The bundle decompressor 60 outputs, to the E2EO unit 62, the service catalog data included in the cluster of pieces of data, in association with the bundle ID determined. Then, the E2EO unit 62 stores the service catalog data into the service catalog storage 64.

The bundle decompressor 60 stores the inventory template data, the CM template data, the service template data, the slice template data, the monitoring script data, the security script data, the helm chart data, and the container image data, in association with the bundle ID corresponding to the cluster of pieces of data, respectively, into the inventory manager 66, the CMaaS unit 68, the service manager 70, the slice manager 72, the monitoring manager 74, the security setter 76, each container manager 78, and the repository 80.

As a result, in the present embodiment, through the bundle ID, the product catalog data, the service catalog data, the inventory template data, the CM template data, the service template data, the slice template data, the monitoring script data, the security script data, the helm chart data, and the container image data are associated with each other.

In the present embodiment, through a simple operation, such as designation of the path of the bundle file, the vendor can provide the network service easily.

In the present embodiment, for example, the bundle manager 50 receives the product catalog data associated with the bundle ID, transmitted from the bundle decompressor 60. Then, the bundle manager 50 stores the received product catalog data into the product catalog storage 52.

In the present embodiment, for example, as described above, the product catalog storage 52 stores the product catalog data associated with the bundle ID.

In the present embodiment, for example, the purchase manager 54 receives, from the purchaser terminal 14, a construction request for the network service, such as the purchase request for the network service, associated with the bundle ID and the service-requirement data. Hereinafter, the bundle ID associated with the purchase request is referred to as a purchase bundle ID, and the service-requirement data associated with the purchase request is referred to as purchase service-requirement data.

Then, in response to reception of the purchase request described above, the purchase manager 54 transmits, to the E2EO unit 62, the purchase service-requirement data associated with the purchase bundle ID.

In cooperation with the E2EO unit 62 and the inventory manager 66, the purchase manager 54 specifies a period for provision of the network service that the purchaser purchases. Then, the purchase manager 54 notifies the purchaser of the specified period. For example, the purchase manager 54 generates a purchase confirmation screen indicating the specified period and transmits the generated purchase confirmation screen to the purchaser terminal 14.

In the present embodiment, for example, the inventory database 82 serves as a database storing inventory information regarding the plurality of servers 90 disposed in the core network systems 20 and the base-station apparatuses 22, managed by the NOS 12.

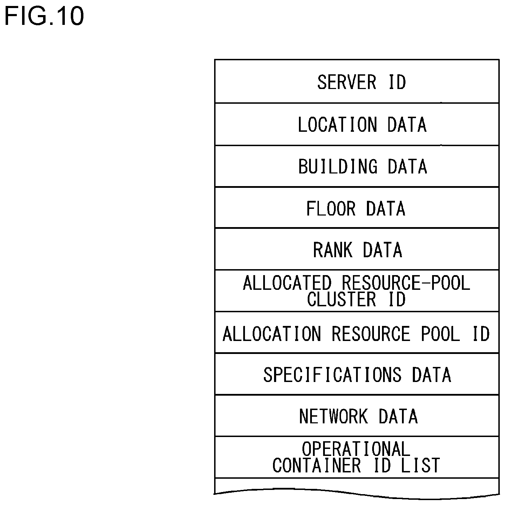

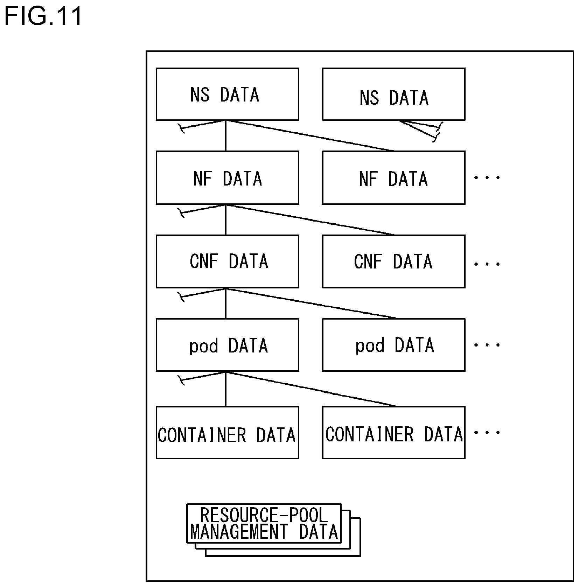

In the present embodiment, for example, the inventory database 82 has stored inventory data including physical inventory data illustrated in Fig. 10 and logical inventory data illustrated in Fig. 11. The inventory data indicates the condition of resources managed by the NOS 12 (e.g., the usage condition of resources).

Fig. 10 illustrates an exemplary of data structure of physical inventory data. The physical inventory data illustrated in Fig. 10 is linked with a single server 90. For example, the physical inventory data illustrated in Fig. 10 includes a server ID, location data, building data, floor data, rack data, an allocated resource-pool cluster ID, an allocated resource pool ID, specifications data, network data, and an operational container ID list.

For example, the server ID included in the physical inventory data corresponds to the identifier of the server 90 linked with the physical inventory data.

For example, the location data included in the physical inventory data indicates the location of the server 90 linked with the physical inventory data (e.g., the location address).

For example, the building data included in the physical inventory data indicates the building in which the server 90 linked with the physical inventory data is disposed (e.g., the building name).

For example, the floor data included in the physical inventory data indicates the floor at which the server 90 linked with the physical inventory data is disposed.

For example, the rack data included in the physical inventory data corresponds to the identifier of the rack at which the server 90 linked with the physical inventory data is disposed.

For example, the allocated resource-pool cluster ID included in the physical inventory data corresponds to the identifier of a cluster of resource pools to which the server 90 linked with the physical inventory data is allocated.

For example, the allocated resource pool ID included in the physical inventory data corresponds to the identifier of a resource pool to which the server 90 linked with the physical inventory data is allocated. The resource pool indicated by the allocated resource pool ID is any of the resource pools included in the cluster of resource pools corresponding to the allocated resource-pool cluster ID. Note that, in the present embodiment, a free server is allocated to a cluster of resource pools, but it is undetermined to which one of the resource pools included in the cluster of resource pools the free server is to be allocated. Such a free server has null set as the value of the allocated resource pool ID included in the corresponding physical inventory data.

For example, the specifications data included in the physical inventory data indicates the specifications of the server 90 linked with the physical inventory data, such as the number of cores, the memory capacity, and the hard-disk capacity of the server 90.

For example, the network data included in the physical inventory data indicates a NIC included in the server 90 linked with the physical inventory data and the number of ports of the NIC.

For example, the operational container ID list included in the physical inventory data indicates a list of the identifier (container ID) of an instance of a single container or the identifiers (container IDs) of instances of a plurality of containers that operates in the server 90 linked with the physical inventory data.

Fig. 11 schematically illustrates an exemplary of data structure of logical inventory data. As illustrated in Fig. 11, the logical inventory data includes network service (NS) data, network function (NF) data, CNF data, pod data, and container data.

For example, the NS data indicates attributes, such as the identifier of an instance of a network service corresponding to a virtual RAN (vRAN) and the type of the network service. For example, the NF data indicates attributes, such as the identifier of an instance of a network function corresponding to an eNodeB and the type of the network function. For example, the CNF data indicates attributes, such as the identifier of an instance of a CNF corresponding to a vCU or a vDU and the type of the CNF. The pod data indicates attributes, such as the identifier of an instance of a pod included in the CNF and the type of the pod. Here, such a pod represents a minimum unit for management of a docker container in Kubernetes. The container data indicates attributes, such as the container ID of an instance of a container included in the pod and the type of the container.

Note that data indicating attributes, such as a host name and an IP address, may be set in the above data included in the logical inventory data. For example, the container data may include data indicating the IP address of the container corresponding to the container data. For example, the CNF data may include data indicating the IP address and host name of the CNF indicated in the CNF data.

The above data has a hierarchical structure, in which the NS data is in association with a single piece of NF data corresponding to a single network function or is in association with a plurality of pieces of NF data corresponding to a plurality of network functions, included in the network service corresponding to the NS data. The NF data is in association with a single piece of CNF data corresponding to a single CNF or is in association with a plurality of pieces of CNF data corresponding to a plurality of CNFs, included in the network function corresponding to the NF data. The CNF data is in association with a single piece of pod data corresponding to a single pod or is in association with a plurality of pieces of pod data corresponding to a plurality of pods, included in the CNF corresponding to the CNF data. The pod data is in association with a single piece of container data corresponding to a single container or is in association with a plurality of pieces of container data corresponding to a plurality of containers, included in the pod corresponding to the pod data.

On the basis of the container ID of the container data included in the logical inventory data and the container ID included the operational container ID list included in the physical inventory data, the instance of the container and the server 90 having the instance of the container in operation are associated together.

Note that, in the present embodiment, the network service that the purchaser purchases (the network service linked with the product catalog data) does not necessarily correspond to the network service linked with the NS data. For example, the network service that the purchaser purchases may be achieved by a cluster of functional units corresponding to the network function linked with a single piece of NF data or a plurality of pieces of NF data or may be achieved by a cluster of functional units linked with a single piece of CNF data or a plurality of pieces of CNF data. The network service that the purchaser purchases may be achieved by a cluster of functional units linked with a single pod or a plurality of pods or may be achieved by a cluster of functional units linked with a single container or a plurality of containers.

As illustrated in Fig. 11, the logical inventory data according to the present embodiment includes a plurality of pieces of resource-pool management data each linked with a cluster of resource pools.

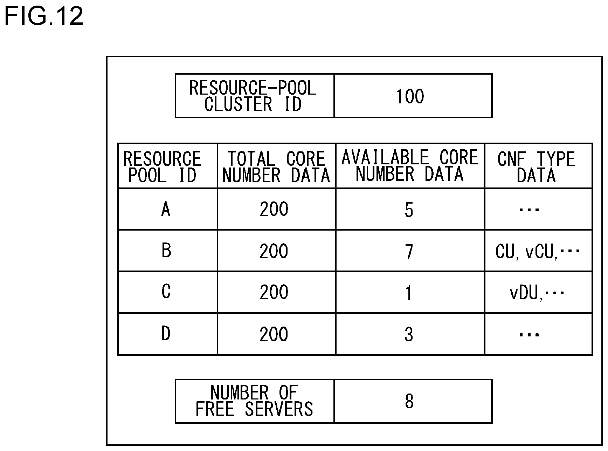

Fig. 12 illustrates exemplary of resource-pool management data according to the present embodiment. The resource-pool management data indicates the condition of a plurality of resource pools included in a cluster of resource pools linked with the resource-pool management data.

The resource-pool management data illustrated in Fig. 12 includes a resource-pool cluster ID, a plurality of pieces of resource pool data, and free-server number data.

The resource-pool cluster ID included in the resource-pool management data corresponds to the identifier of the cluster of resource pools linked with the resource-pool management data.

The free-server number data included in the resource-pool management data indicates the number of free servers allocated to the cluster of resource pools linked with the resource-pool management data.

The resource pool data indicates the condition of the resource pools included in the cluster of resource pools linked with the resource-pool management data.

As illustrated in Fig. 12, the resource pool data includes a resource pool ID, total core number data, available core number data, and CNF type data.

The resource pool ID corresponds to the identifier of a resource pool.

The total core number data indicates the total number of cores of servers 90 allocated to the resource pool. The total core number data is specific exemplary resource total quantity data indicating the total quantity of hardware resources included in the resource pool.

The available core number data indicates the number of available cores of a server 90 allocated to the resource pool. The available core number data is specific exemplary resource available quantity data indicating the available quantity of a hardware resource included in the resource pool.

The CNF type data indicates at least one type of CNF associated with the resource pool. The CNF type data is specific exemplary functional-unit type data indicating at least one type of functional unit associated with the resource pool.

In the present embodiment, a cluster of resource pools over a plurality of locations may be set in advance or a cluster of resource pools linked with a single location may be set in advance. In both cases, the cluster of resource pools is linked with a single location or a plurality of locations indicated in the physical inventory data.

In cooperation with each container manager 78, the inventory manager 66 can appropriately grasp the condition of resources. Then, on the basis of the latest condition of resources, the inventory manager 66 appropriately updates the inventory data stored in the inventory database 82.

In the present embodiment, for example, on the basis of the service-requirement data received from the purchase manager 54, the E2EO unit 62 and the inventory manager 66 specify the configuration of a cluster of functional units for achievement of the network service to be purchased.

Here, for example, the E2EO unit 62 acquires, from the service catalog storage 64, the service catalog data corresponding to the purchase bundle ID associated with the purchase service-requirement data received from the purchase manager 54. Then, the E2EO unit 62 executes the script of workflow indicated in the service catalog data.

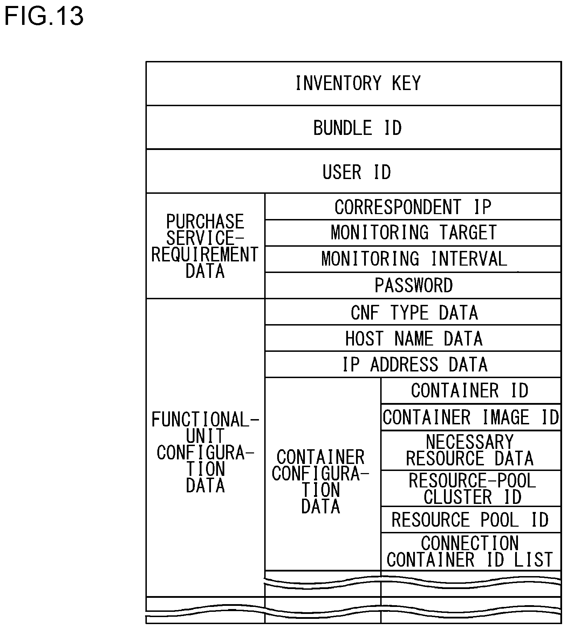

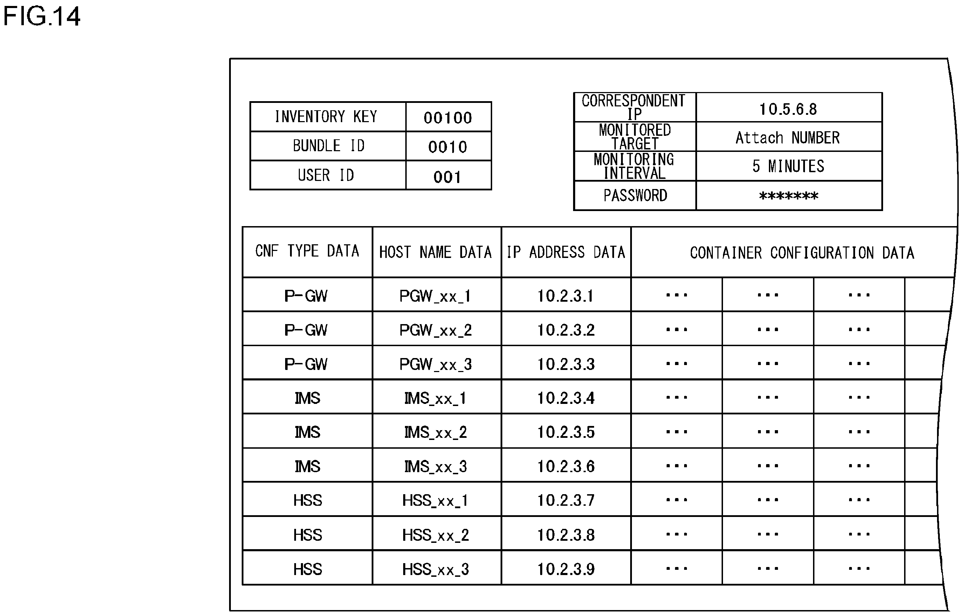

The E2EO unit 62 and the inventory manager 66 generate planned data exemplified in Figs. 13 and 14, on the basis of the purchase service-requirement data received from the purchase manager 54, the service catalog data associated with the purchase bundle ID, the inventory template data associated with the purchase bundle ID, and the inventory data. For example, the planned data indicates the configuration of the cluster of functional units for achievement of the network service to be purchased. For example, this processing is performed on the basis of a trigger of execution of the script of workflow by the E2EO unit 62.

Fig. 13 illustrates an exemplary of data structure of planned data according to the present embodiment. Fig. 14 schematically illustrates exemplary of planned data according to the present embodiment. The planned data according to the present embodiment includes an inventory key as the identifier of the planned data. At the time of generation of the planned data, the inventory key is uniquely allocated to the planned data. The planned data includes a purchase bundle ID ("0010" in the example of Fig. 14). The planned data includes a user ID as the identifier of the purchaser (user) having made the purchase request.

The planned data may include values set in the purchase service-requirement data. The planned data illustrated in Figs. 13 and 14 includes the value of correspondent IP data, the value of monitoring target data, the value of monitoring interval data, and the value of password data, included in the purchase service-requirement data.

Then, in the present embodiment, the planned data includes functional-unit configuration data for each of the functional units included in the cluster of functional units for achievement of the network service to be purchased. For example, the functional-unit configuration data includes CNF type data indicating the type of the functional unit, host name data indicating the host name, IP address data indicating the IP address, and a plurality of pieces of container configuration data linked one-to-one with containers included in the functional unit.

Here, for example, on the basis of the purchase service-requirement data, the E2EO unit 62 may specify the number of clusters of functional units to be constructed. For example, on the basis of the purchase service-requirement data and the requirement-configuration correspondence data included in the service catalog data, the E2EO unit 62 may specify the types of clusters of functional units for achievement of the network service to be purchased and the number of functional units in each type. For example, in a case where the service-requirement data indicates that the number of subscribers is 50000, on the basis of the requirement-configuration correspondence data described above, three P-GWs, three IMSs, and three HSSs may be specified as clusters of functional units to be constructed.

Then, the E2EO unit 62 may output, to the inventory manager 66, data indicating the types of clusters of functional units and the number of functional units in each type, together with the service-requirement data. Then, on the basis of the data and the inventory data, the inventory manager 66 may determine a host name and an IP address to be allocated to each functional unit. Here, for example, a host name and an IP address may be determined so as not to overlap any host name and IP address already in use. Then, generated may be planned data including host name data indicating such a host name determined and IP address data indicating such an IP address determined as above.

As described above, on the basis of the purchase service-requirement data, the E2EO unit 62 may specify a location for construction of each functional unit included in the cluster of functional units to be constructed. For example, on the basis of the target area data included in the purchase service-requirement data and the requirement-configuration correspondence data included in the service catalog data, the E2EO unit 62 may determine a location for each functional unit included in the cluster of functional units to be constructed. Here, a different location may be determined for each functional unit. Then, for each functional unit, any host name and IP address available at the location determined to the functional unit may be determined as the host name and the IP address of the functional unit. Then, generated may be planned data including host name data indicating such a host name determined and IP address data indicating such an IP address determined as above.

On the basis of the purchase service-requirement data, the E2EO unit 62 may specify, for each of a plurality of locations, the types and number of functional units to be constructed at the location. In this case, the E2EO unit 62 may determine, in accordance with a location specified on the basis of the purchase service-requirement data, the number of functional units in each type to be constructed at the location. On the basis of a weight set per location specified on the basis of the purchase service-requirement data, the E2EO unit 62 may determine the number of functional units in each type to be constructed per location.

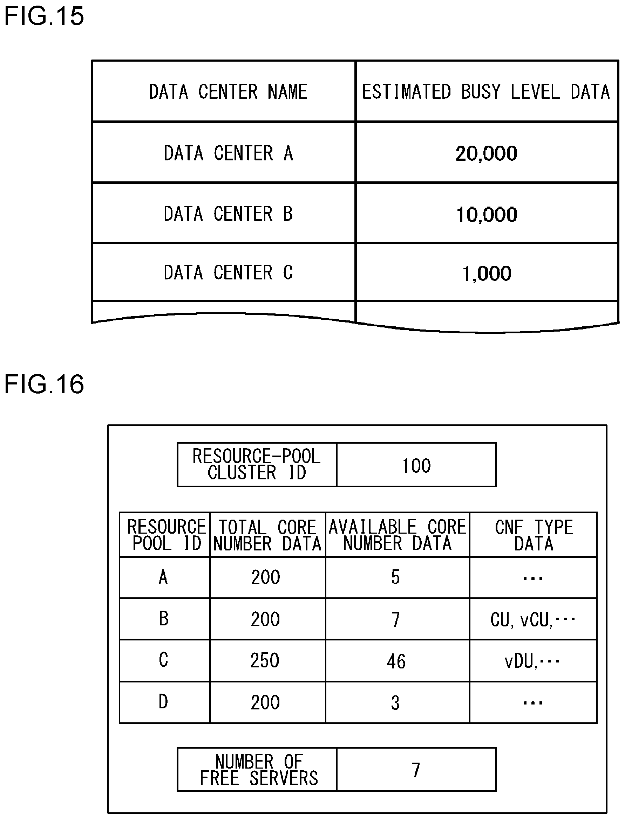

For example, the E2EO unit 62 may store estimated busy level data illustrated in Fig. 15. For example, the estimated busy level data illustrated in Fig. 15 indicates the population in the area covered by a single cell or a plurality of cells under a data center associated with the estimated busy level data. The value of the estimated busy level data is an example of the weight set per location described above.

Here, for example, the estimated busy level data for a data center in a core network system 20 indicates the population in the area covered by the cell of a single base-station apparatus 22 or the cells of a plurality of base-station apparatuses 22 that communicates with the core network system 20.

Then, for example, a larger number of functional unis may be deployed at the location with a larger population indicated in the estimated busy level data. For example, on the basis of the subscriber-number data included in the purchase service-requirement data, specified is the total number n of vDUs to be deployed. Then, on the basis of the target area data included in the purchase service-requirement data, specified is a plurality of data centers as destinations to which vDUs are to be deployed, in the target area indicated in the target area data. In this case, a number of vDUs resulting from proration of the specified total number n of vDUs, based on the value for each specified data center in the estimated busy level data, may be deployed to each data center.

As illustrated in Fig. 13, for example, the container configuration data includes a container ID, a container image ID, necessary resource data, a resource-pool cluster ID, a resource pool ID, and a connection container ID list.

For example, as described above, the container ID corresponds to an identifier uniquely allocated to an instance of the container corresponding to the container configuration data.

For example, the container image ID included in the container configuration data corresponds to the container image ID allocated to a container image of the container corresponding to the container configuration data.

For example, the necessary resource data indicates resources necessary for the container to operate. In the present embodiment, for example, the inventory template data indicates, for each container, resources necessary for the container to operate. On the basis of the inventory template data, the inventory manager 66 sets a value for the necessary resource data.

For example, the resource-pool cluster ID included in the container configuration data corresponds to the value of the resource-pool cluster ID of a cluster of resource pools to which the container corresponding to the container configuration data is allocated. For example, on the basis of such a location determined as described above and the inventory data, the inventory manager 66 may determine a resource-pool cluster ID for construction of the container.

For example, the resource pool ID included in the container configuration data corresponds to the value of the resource pool ID of a resource pool to which the container corresponding to the container configuration data is allocated. For example, on the basis of the type of the container and the resource-pool management data, the inventory manager 66 may determine a resource pool ID.

The connection container ID list is a list of container IDs of containers that are connected to the container. In the present embodiment, for example, the inventory template data indicates, for each container, the type of a container that is connected to the container. For example, on the basis of the inventory template data and the inventory data, the inventory manager 66 determines a value for the connection container ID list.

At the time of generation of planned data, in cooperation with the inventory manager 66, the E2EO unit 62 specifies a resource pool to have a new cluster of functional units deployed and necessary resources. Here, the E2EO unit 62 may specify a resource pool associated with a functional unit specified in response to reception of a construction request for the network service, such as reception of the purchase request. On the basis of the target area of the network service to be purchased, the E2EO unit 62 may specify a cluster of resource pools. For example, on the basis of the target area indicated in the target area data included in the purchase service-requirement data, a cluster of resource pools may be specified. Then, the E2EO unit 62 may specify a resource pool to have a new cluster of functional units deployed, from the resource pools included in the specified cluster of resource pools.

The E2EO unit 62 determines whether or not a hardware resource (herein, for example, a server 90) to have a new cluster of functional units deployed can be secured. Herein, for example, it is determined (1) that a server 90 can be secured, (2) that a server 90 can be secured due to setup of an unused hardware resource (herein, for example, a free server) not included in any of the resource pools, or (3) that no server 90 can be secured.

Here, in a case where (2) results from the determination, the E2EO unit 62 determines whether or not a previously determined particular type of functional unit is to be deployed to an unused hardware resource (herein, for example, a free server).

Then, in a case where the particular type of functional unit is to be deployed, the E2EO unit 62 specifies a resource pool associated with the particular type of functional unit. Here, for example, on the basis of the resource-pool management data, the resource pool is specified.

In the present embodiment, for example, the resource-pool cluster ID of the cluster of resource pools specified and the resource pool ID of the resource pool specified as above are set to the container configuration data.

In the present embodiment, for example, on the basis of the configuration of a cluster of functional units specified as described above and template data enabling reception of the configuration as a parameter, the CMaaS unit 68, the service manager 70, and the slice manager 72 specify a procedure of construction of the cluster of functional units. For example, the procedure of construction includes a procedure of configuration management of containers, such as deployment of a container and setting of the deployed container and a container related to the container. For example, this processing is performed on the basis of a trigger of execution of a script of workflow by the E2EO unit 62.

Then, the CMaaS unit 68, the service manager 70, the slice manager 72, and the container manager 78 perform the specified procedure of construction to construct the cluster of functional units. For example, this processing is performed on the basis of a trigger of execution of a script of workflow by the E2EO unit 62.

Note that each functional unit included in the cluster of functional units may be constructed at the location specified for the functional unit.

For example, constructed may be a number of clusters of functional units specified on the basis of the purchase service-requirement data.

For example, for each of a plurality of locations, constructed may be a specified number of functional units of which the type is specified for the location.

Here, for example, the CMaaS unit 68 and the BMaaS unit 84 secure a hardware resource (herein, for example, a server 90) to have a new cluster of functional units deployed.

The CMaaS unit 68 and the BMaaS unit 84 perform, to an unused hardware resource, setup of system software appropriate to a particular type of functional unit. In the present embodiment, for example, the CMaaS unit 68 or the BMaaS unit 84 has stored a script (e.g., an ansible script) for setup for the particular type of functional unit described above. For example, the script includes a procedure of installation of a particular type or particular version of host OS that is the infrastructure for the container execution environment, a procedure of setting of the kernel of the host OS, and a procedure of setting of a basic input output system (BIOS). Then, the BMaaS unit 84 executes the script, so that the setup of system software appropriate to the particular type of functional unit is performed to a free server. For example, setup of the host OS and the BIOS for the container execution environment is performed to a free server.

Then, the CMaaS unit 68 or the BMaaS unit 84 updates the resource-pool management data and adds, to the resource pool specified, the unused hardware resource subjected to the setup of system software. Such addition of the hardware resource to the resource pool is detected by the container manager 78 that manages the hardware resource. Then, the inventory manager 66 updates the inventory data corresponding to the added hardware resource (server 90). As a result, the resource pool includes the hardware resource subjected to the setup of system software appropriate to the particular type of functional unit.

Herein, for example, the particular type of functional unit is a vDU. The number of cores necessary for the vDU is five and the number of cores of the free server is 50.

In this case, at the time of purchase of the network service including the vDU, a resource pool associated with the vDU is specified. In the example of Fig. 12, the resource pool of which the resource pool ID is C is specified. Then, it is checked whether or not the remaining hardware resource of the resource pool is sufficient. Then, in a case where the remaining hardware resource is insufficient, the setup of system software appropriate to the vDU is performed to a signal free server. Then, the server 90 subjected to the setup of system software is added to the resource pool C, and the resource-pool management data is updated as illustrated in Fig. 16.

As a result, in the present embodiment, a hardware resource included in a resource pool corresponding to the resource pool data has been subjected to the setup of system software appropriate to at least one type of functional unit associated with the resource pool.

Depending on a type of functional unit, a general-purpose server typical in configuration may be insufficient in performance. Thus, for such a particular type of functional unit, preferably, dedicated setup of system software, such as a host OS and a BIOS, is performed to a hardware source, such as a server. In this case, it can be thought that a required number of hardware resources subjected to such dedicated setup of system software are prepared in advance before a start on provision of the network service, and as necessary, the functional unit is deployed to the prepared hardware resources.

However, before a start on provision of the network service, it is difficult to estimate an optimum number of hardware resources that should be subjected in advance to setup of system software appropriate to a particular type of functional unit. If setup of system software appropriate to a particular type of functional unit is performed to plenty of hardware resources, such hardware resources are not suitable to deployment of different functional units, resulting in a waste of resources.

In the present embodiment, as described above, in order to deploy a particular type of functional unit to an unused hardware resource, setup of system software appropriate to the particular type of functional unit is performed to the unused hardware resource. Then, the unused hardware resource subjected to the setup of system software is added to a resource pool associated with the particular type of functional unit.

As a result, in the present embodiment, effectively utilized can be hardware resources to have various types of functional units deployed for achievement of the network service.

Note that, in the present embodiment, a functional unit may be specified on the basis of a result of demand prediction. For example, on the basis of a result of demand prediction, specified may be a functional unit predicted to be insufficient in the near future. Then, specified may be a resource pool associated with the functional unit specified as above. Then, the resource pool may have, added thereto, an unused hardware resource subjected to setup of system software appropriate to the functional unit.

When a hardware resource is secured to have a new cluster of functional units deployed, for example, on the basis of the planned data described above and the service template data associated with the purchase bundle ID, stored in the service manager 70, the service manager 70 instructs the container manager 78 to deploy the new cluster of functional units. The service template data enables reception of part of the planned data or the entirety of the planned data as a parameter.

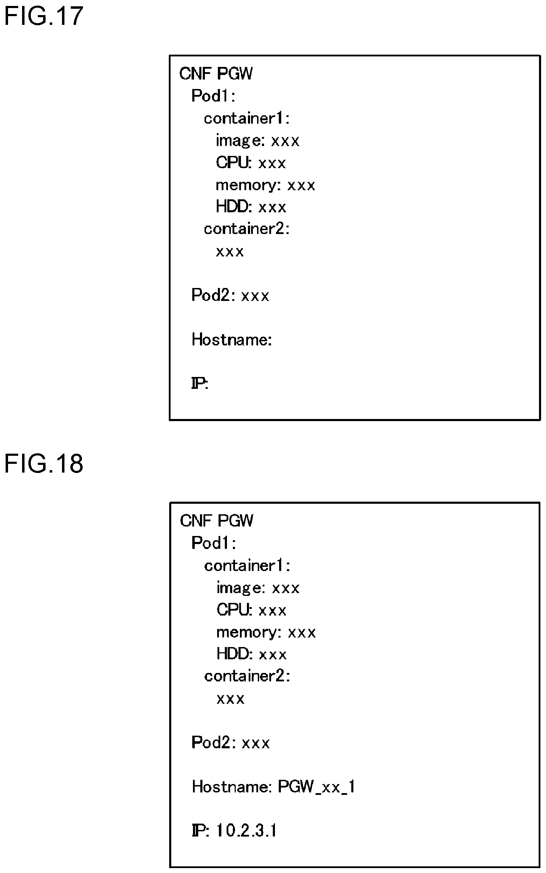

An example of the service template data described above is a CNF descriptor (CNFD). Fig. 17 illustrates an exemplary of CNFD. For example, on the basis of the planned data and the CNFD, the service manager 70 generates a day0 parameter (CNF instance) illustrated in Fig. 18. For example, the generated day0 parameter illustrated in Fig. 18 includes a host name and the value of an IP address set to the CNFD illustrated in Fig. 17.

Here, the CNFD may include templates linked one-to-one with a plurality of deployment flavors. Then, for example, on the basis of the template corresponding to a deployment flavor appropriate to the purchase service-requirement data, the service manager 70 may generate a day0 parameter.

Here, the service manager 70 may specify a location as the destination of output of a day0 parameter. For example, a single container manager 78 or a plurality of container managers 78 may be specified as the destination of output of a day0 parameter. For example, specified may be the container manager 78 linked with a server 90 disposed at the location of a resource pool indicated in the container configuration data in the planned data. Then, generated may be a day0 parameter to be output to each specified location. For example, generated may be a day0 parameter to be output to a single container manager 78 or each of a plurality of container managers 78 as the destination of output.

Then, the service manager 70 outputs the single day0 parameter generated or each of the plurality of day0 parameters generated to the container manager 78 as the location of the destination of output of the day0 parameter. The day0 parameter is in association with the purchase bundle ID.

Then, on the basis of the received day0 parameter, the container manager 78 deploys the new cluster of functional units. For example, on the basis of the helm chart data linked with the purchase bundle ID and the received day0 parameter, the container manager 78 specifies a container image to be deployed and a resource pool to have a container deployed. Then, the container manager 78 acquires the container image from the repository 80 and deploys, to the specified resource pool, the container corresponding to the container image. Herein, for example, on the basis of the helm chart data linked with the purchase bundle ID and the received day0 parameter, a manifest file is generated. Then, with the manifest file, deployment of the container is performed.

For example, on the basis of the planned data described above and the CM template data associated with the purchase bundle ID stored in the CMaaS unit 68, the CMaaS unit 68 generates planned CM data including a day1 parameter. The CM template data enables reception of part of the planned data or the entirety of the planned data as a parameter.

For example, the day1 parameter indicates a procedure of configuration management, such as setting of the deployed cluster of functional units and at least one functional unit related to the cluster of functional units (e.g., a functional unit that communicates with the deployed cluster of functional units). For example, the day1 parameter relating to a base-station apparatus 22 indicates radio field intensity, the orientation and angle of the antenna 22a, and a serial number. For example, the day1 parameter relating to a serving-gateway (S-GW) indicates information indicating a correspondent node (e.g., information indicating the mobility management entity (MME) of a communication partner and an access point name (APN)), and the host name or FQDN of a remote authentication dial in user service (RADIUS) server.

Then, on the basis of the day1 parameter included in the generated planned CM data, the CMaaS unit 68 performs configuration management, such as setting of the functional unit. For example, such processing is performed on the basis of a trigger of execution of a script of workflow by the E2EO unit 62.

Then, for example, on the basis of the planned data described above and the slice template data associated with the purchase bundle ID stored in the slice manager 72, the slice manager 72 performs instantiation of a network slice relating to the network service to be purchased. The slice template data enables reception of part of the planned data or the entirety of the planned data as a parameter. For example, this processing is performed on the basis of a trigger of execution of a script of workflow by the E2EO unit 62.

Here, the slice manager 72 may output, to the CMaaS unit 68, an instruction for configuration management relating to the instantiation of a network slice. Then, the CMaaS unit 68 may perform configuration management, such as setting based on the instruction for configuration management.

Here, for example, after performing configuration management regarding the new cluster of functional units at the time of completion of deployment of the new cluster of functional units, the CMaaS unit 68 may perform configuration management relating to the instantiation of a network slice.

Alternatively, on the basis of an instruction for configuration management received from the slice manager 72, the CMaaS unit 68 may update the day1 parameter generated once. Then, the CMaaS unit 68 may collectively perform configuration management relating to the new cluster of functional units and configuration management relating to the instantiation of a network slice.

In the present embodiment, for example, on the basis of the planned data described above and the monitoring script data associated with the purchase bundle ID stored in the monitoring manager 74, the monitoring manager 74 specifies the monitoring policies indicated in the purchase service-requirement data. Then, the monitoring manager 74 performs monitoring setting based on the specified monitoring policies. Then, the monitoring manager 74 monitors a cluster of functional units to be constructed in accordance with the specified monitoring policies. Herein, for example, monitoring at the monitoring interval indicated in the purchase service-requirement data may be performed to the monitoring target indicated in the purchase service-requirement data. For example, this processing is performed on the basis of a trigger of execution of a script of workflow by the E2EO unit 62.

For example, the monitoring manager 74 may deploy a sidecar that outputs, at the monitoring interval described above, as a log, the value of the metric for the monitoring target, associated with the container of the monitoring target. Then, the sidecar may output the log to the monitoring manager 74, in accordance with the monitoring setting described above. Then, the monitoring manager 74 may accumulate the log. Then, for example, in response to a request from the purchaser terminal 14, the monitoring manager 74 may transmit the log to the purchaser terminal 14.

In the present embodiment, for example, on the basis of the planned data described above and the security script data associated with the purchase bundle ID stored in the security setter 76, for example, the security setter 76 performs security setting, such as setting of the password, based on the value in the purchase service-requirement data.

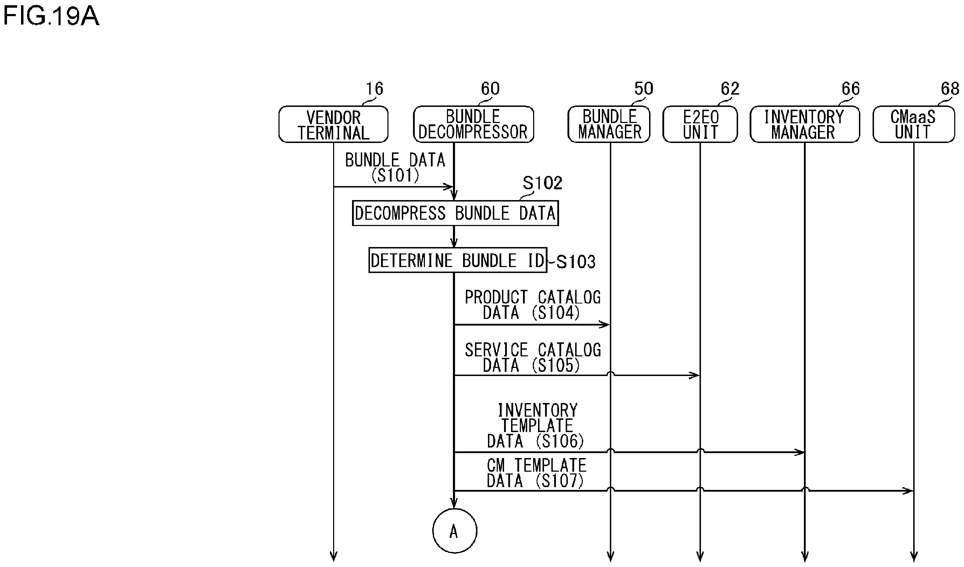

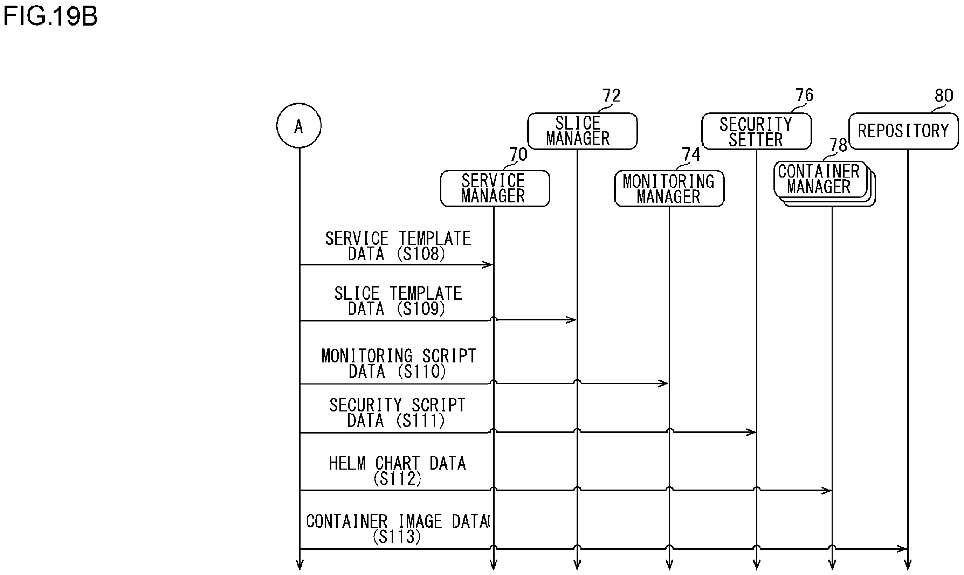

Here, a flow of processing that is performed between the vendor terminal 16, the MPS 10, and the NOS 12 when the vendor clicks on the onboarding button 40 on the onboarding screen illustrated in Fig. 7 will be described with reference to flowcharts illustrated in Figs. 19A and 19B.

First, the vendor terminal 16 transmits, to the bundle decompressor 60 in the NOS 12, the bundle data disposed at the path designated on the onboarding screen (S101).

Then, the bundle decompressor 60 decompresses the bundle data received in the processing in S101 and generates the cluster of pieces of data illustrated in Fig. 9 (S102).

Then, the bundle decompressor 60 determines a bundle ID corresponding to the cluster of pieces of data in S102 (S103).

Then, the bundle decompressor 60 transmits, to the bundle manager 50 in the MPS 10, the product catalog data included in the cluster of pieces of data in S102, associated with the bundle ID determined in the processing in S103. Then, the bundle manager 50 in the MPS 10 stores the received product catalog data into the product catalog storage 52 (S104).

Then, the bundle decompressor 60 outputs, to the E2EO unit 62, the service catalog data included in the cluster of pieces of data in S102, associated with the bundle ID determined in the processing in S103. Then, the E2EO unit 62 stores the received service catalog data into the service catalog storage 64 (S105).

Then, the bundle decompressor 60 stores, into the inventory manager 66, the inventory template data included in the cluster of pieces of data in S102, associated with the bundle ID determined in the processing in S103 (S106).

Then, the bundle decompressor 60 stores, into the CMaaS unit 68, the CM template data included in the cluster of pieces of data in S102, associated with the bundle ID determined in the processing in S103 (S107).

Then, the bundle decompressor 60 stores, into the service manager 70, the service template data included in the cluster of pieces of data in S102, associated with the bundle ID determined in the processing in S103 (S108).

Then, the bundle decompressor 60 stores, into the slice manager 72, the slice template data included in the cluster of pieces of data in S102, associated with the bundle ID determined in the processing in S103 (S109).

Then, the bundle decompressor 60 stores, into the monitoring manager 74, the monitoring script data included in the cluster of pieces of data in S102, associated with the bundle ID determined in the processing in S103 (S110).

Then, the bundle decompressor 60 stores, into the security setter 76, the security script data included in the cluster of pieces of data in S102, associated with the bundle ID determined in the processing in S103 (S111).

Then, the bundle decompressor 60 stores, into a container manager 78, the helm chart data included in the cluster of pieces of data in S102, associated with the bundle ID determined in the processing in S103 (S112). Here, for example, the bundle decompressor 60 may store the helm chart included in the cluster of pieces of data in S102 into a plurality of container managers 78. The helm chart data linked with a container manager 78 may be stored into the container manager 78.

Then, the bundle decompressor 60 stores, into the repository 80, the container image data included in the cluster of pieces of data in S102, associated with the bundle ID determined in the processing in S103 (S113), and then the processing in the present processing example terminates.

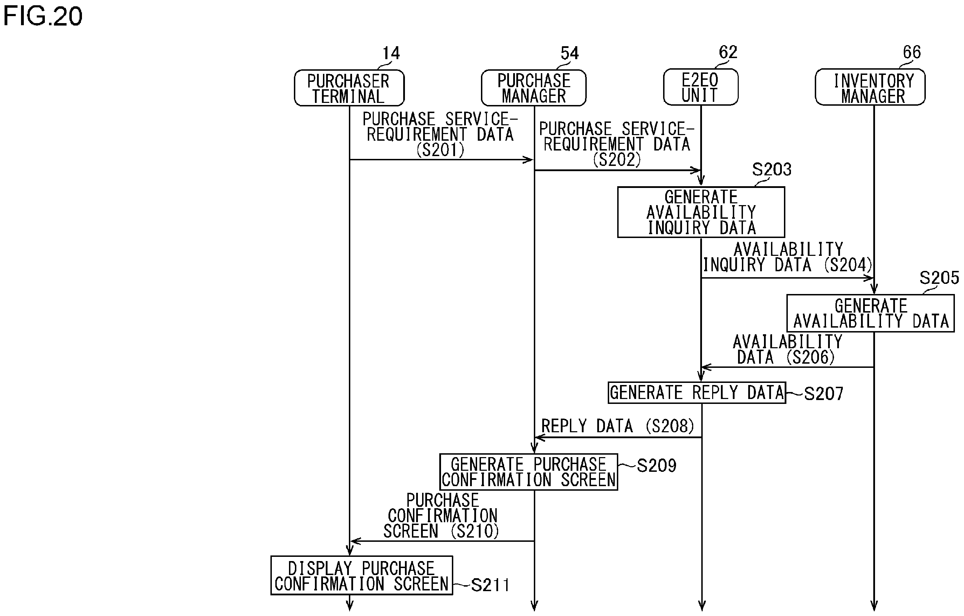

Next, a flow of processing that is performed between the purchaser terminal 14, the MPS 10, and the NOS 12 when the purchaser clicks on the next button 32 on the service-requirement input screen illustrated in Fig. 3 will be described with reference to a flowchart illustrated in Fig. 20.

First, the purchaser terminal 14 transmits, to the purchase manager 54 in the MPS 10, the purchase service-requirement data associated with a purchase bundle ID (S201). The purchase bundle ID corresponds to the bundle ID of the network service selected by the purchaser on the purchase screen illustrated in Fig. 2. The purchase service-requirement data corresponds to the service-requirement data indicating the details of input on the service-requirement input screen illustrated in Fig. 3.

Then, the purchase manager 54 in the MPS 10 transmits, to the E2EO unit 62 in the NOS 12, the purchase service-requirement data associated with the purchase bundle ID, received in the processing in S201 (S202).

Then, on the basis of the service catalog data associated with the purchase bundle ID, the E2EO unit 62 in the NOS 12 generates availability inquiry data (S203). Herein, for example, generated is availability inquiry data indicating types of clusters of functional units for achievement of the network service to be purchased and the number of functional units in each type.

Then, the E2EO unit 62 outputs, to the inventory manager 66, the availability inquiry data generated in the processing in S203 (S204).

Then, on the basis of the received availability inquiry data, the inventory data, and the inventory template data, the inventory manager 66 generates availability data (S205). Herein, for example, generated is availability data indicating (1) that a hardware resource to have a cluster of functional units indicated in the received availability inquiry data, deployed, can be secured, (2) that the hardware resource can be secured due to addition of a free server to a resource pool, or (3) that no hardware resource can be secured.

Then, the inventory manager 66 transmits, to the E2EO unit 62, the availability data generated in the processing in S205 (S206).

Then, on the basis of the availability data received in the processing in S206, the E2EO unit 62 generates reply data (S207). Herein, for example, in a case where the availability data indicates (1) or (2) described above, reply data indicating OK is generated. In a case where the availability data indicates (3) described above, reply data indicating NG is generated.

Then, the E2EO unit 62 transmits, to the purchase manager 54 in the MPS 10, the reply data generated in the processing in S207 (S208).

Then, on the basis of the reply data received in the processing in S208, the purchase manager 54 generates a purchase confirmation screen (S209). Herein, for example, in a case where the received reply data indicates OK, the purchase confirmation screen indicating that an instant provision can be made, illustrated in Fig. 4, is generated. Meanwhile, in a case where the received replay data indicates NG, the purchase configuration screen indicating that it will take a predetermined period for provision (for example, it will take two weeks for provision), illustrated in Fig. 5, is generated.

Then, the purchase manager 54 transmits, to the purchaser terminal 14, the purchase confirmation screen generated in the processing in S209 (S210).

Then, the purchaser terminal 14 displays, on the display of the purchaser terminal 14, the purchase confirmation screen received in the processing in S210 (S211), and then the processing in the present processing example terminates.

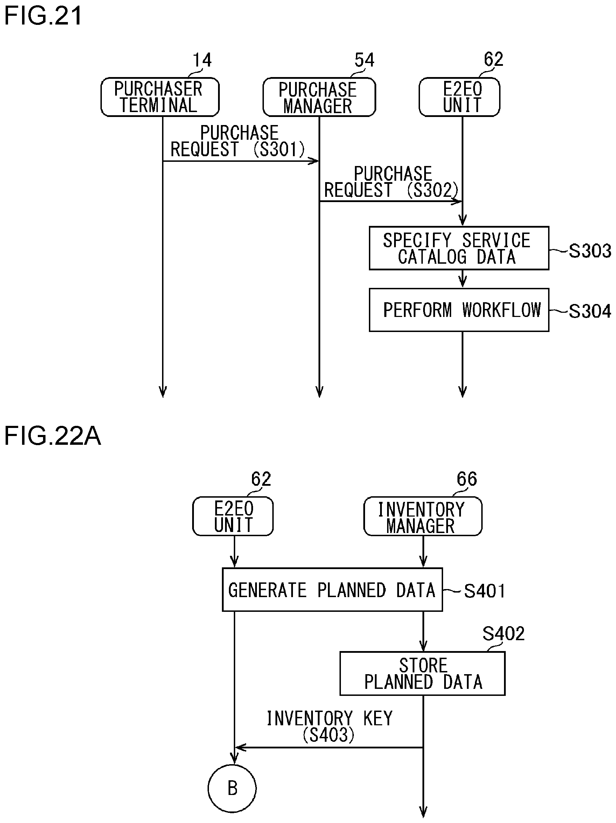

Next, a flow of processing that is performed between the purchaser terminal 14, the MPS10, and the NOS 12 when the purchaser clicks on the purchase button 34 on the purchase confirmation screen illustrated in Fig. 4 or 5 will be described with reference to a flowchart illustrated in Fig. 21.

First, the purchaser terminal 14 transmits a purchase request for the network service to the purchase manager 54 in the MPS 10 (S301). The purchase request is in association with the purchase bundle ID and the purchase service-requirement data transmitted in the processing in S201.

Then, the purchase manager 54 transmits, to the E2EO unit 62, the purchase request associated with the purchase bundle ID and the purchase service-requirement data, received in the processing in S301 (S302).

Then, the E2EO unit 62 specifies the service catalog data corresponding to the purchase bundle ID associated with the received purchase request (S303).

Then, the E2EO unit 62 acquires, from the service catalog storage 64, the service catalog data specified in the processing in S303 and executes a script of workflow indicated in the service catalog data (S304), and then the processing in the present processing example terminates.

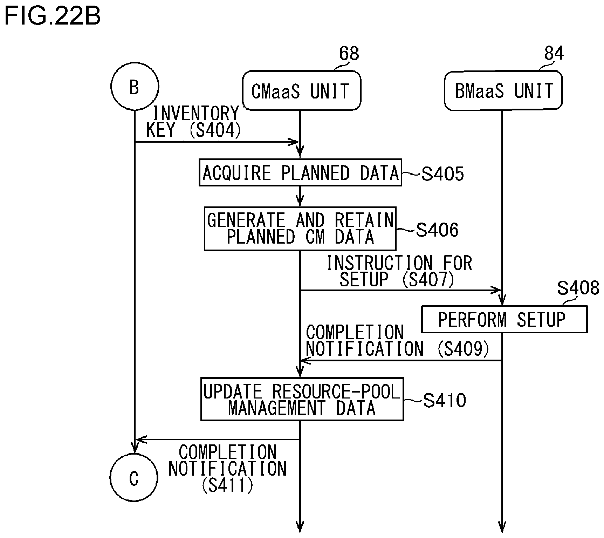

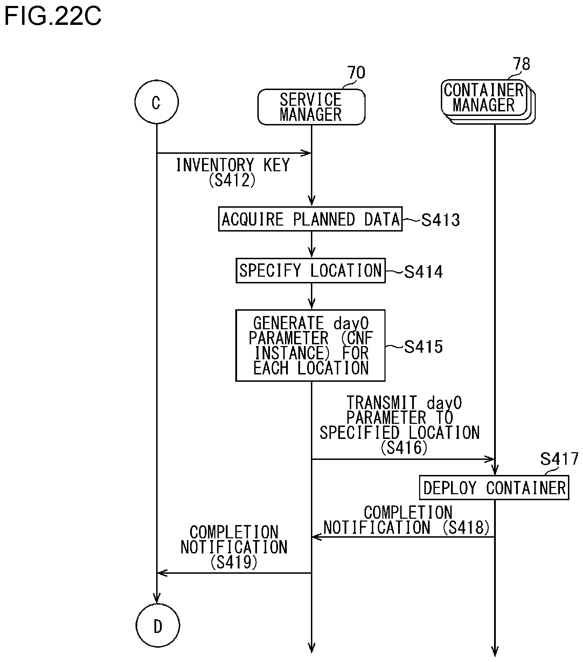

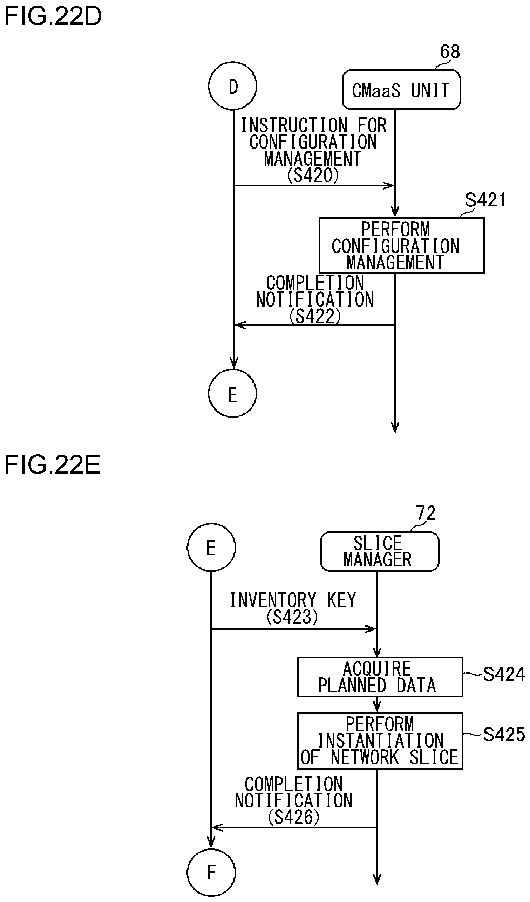

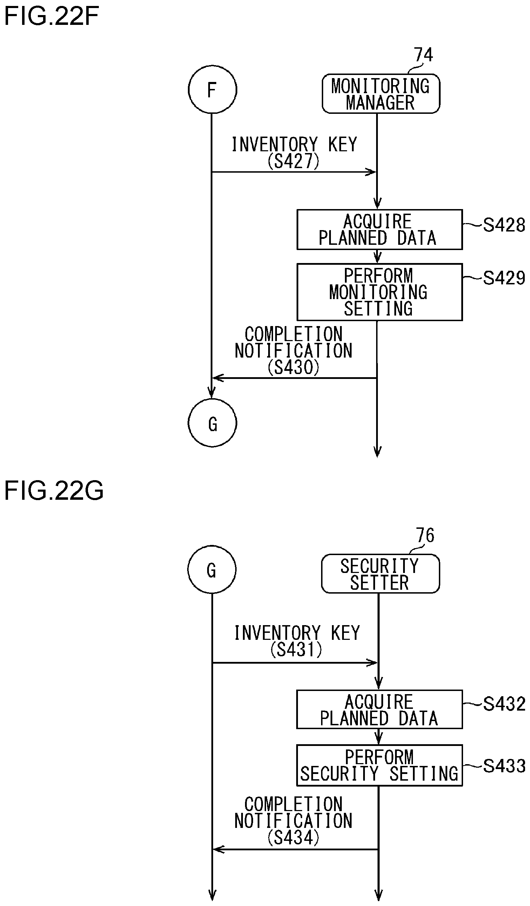

Here, the processing in S304 will be described in detail with reference to flowcharts illustrated in Figs. 22A to 22G.

First, the E2EO unit 62 and the inventory manager 66 generate planned data, on the basis of the purchase service-requirement data, the service catalog data, the inventory template data, and the inventory data associated with the purchase request (S401). For example, the processing that is performed in S401 includes processing of specifying a resource pool to have a cluster of functional units deployed and necessary resources.

Then, the inventory manager 66 stores the generated planned data into the inventory database 82 (S402).

Then, the inventory manager 66 outputs, to the E2EO unit 62, the inventory key included in the generated planned data (S403).

Then, the E2EO unit 62 outputs the received inventory key to the CMaaS unit 68 (S404).

Then, the CMaaS unit 68 acquires, from the inventory database 82, the planned data including the received inventory key (S405).

Then, on the basis of the planned data acquired in the processing in S405, the CMaaS unit 68 generates and retains planned CM data including a day1 parameter (S406).

Then, the CMaaS unit 68 outputs, to the BMaaS unit 84, an instruction for setup, such as securement of a necessary hardware resource (S407), and the BMaaS unit 84 performs setup, such as securement of a hardware resource, appropriate to the instruction (S408). In this case, as necessary, setup of system software appropriate to a particular type of functional unit or addition of a free server to the resource pool is performed.

Note that, in the present embodiment, addition of a free server to the resource pool may be performed so as to have an allowance (buffer). For example, a plurality of servers 90 may be collectively added to the resource pool.

Then, the BMaaS unit 84 outputs completion notification to the CMaaS unit 68 (S409), and then the CMaaS unit 68 updates the resource-pool management data (S410). Herein, for example, the value of the available core number data of the resource pool having the hardware resource secured may be reduced. The value of the free-server number data or the value of the total core number data may be updated. Note that, in the processing in S410, the BMaaS unit 84 may update the resource-pool management data, instead of the CMaaS unit 68. In accordance with an instruction from the CMaaS unit 68, the inventory manager 66 may update the resource-pool management data.

Then, the CMaaS unit 68 outputs completion notification to the E2EO unit 62 (S411).

Then, the E2EO unit 62 outputs, to the service manager 70, the inventory key received in the processing in S403 (S412).

Then, the service manager 70 acquires, from the inventory database 82, the planned data including the received inventory key (S413).

Then, on the basis of the planned data acquired in the processing in S418, the service manager 70 specifies a location to have a cluster of functional units deployed (S414).

Then, the service manager 70 generates a day0 parameter (CNF instance) for each location specified in the processing in S414 (S415).

Then, the service manager 70 outputs, to the container manager 78 corresponding to each location specified in the processing in S414, the day0 parameter corresponding to the container manager 78 (S416).

Then, on the basis of the received day0 parameter, the container manager 78 performs deployment of a container (S417).

Then, the container manager 78 outputs completion notification to the service manager 70 (S418).

Then, the service manager 70 outputs completion notification to the E2EO unit 62 (S419).

Then, the E2EO unit 62 outputs, to the CMaaS unit 68, an instruction for configuration management based on the day1 parameter (S420).

Then, the CMaaS unit 68 performs configuration management for a cluster of containers based on the day1 parameter included in the retained planned CM data (S421).

Then, the CMaaS unit 68 outputs completion notification to the E2EO unit 62 (S422).

Then, the E2EO unit 62 outputs, to the slice manager 72, the inventory key received in the processing in S403 (S423).

Then, the slice manager 72 acquires, from the inventory database 82, the planned data including the received inventory key (S424).

Then, on the basis of the planned data acquired in the processing in S429, the slice manager 72 performs instantiation of a network slice (S425). In the processing in S425, for example, as described above, the slice manager 72 may output, to the CMaaS unit 68, an instruction for configuration management relating to the instantiation of a network slice. Then, the CMaaS unit 68 may perform configuration management, such as setting based on the instruction for configuration management.

Without the processing from S420 to S422 described above, in the processing in S425, the CMaaS unit 68 may update the day1 parameter, on the basis of an instruction for configuration management received from the slice manager 72. Then, the CMaaS unit 68 may perform configuration management, such as setting based on the instruction for configuration management.

Then, the slice manager 72 outputs completion notification to the E2EO unit 62 (S426).

Then, the E2EO unit 62 outputs, to the monitoring manager 74, the inventory key received in the processing in S403 (S427).

Then, the monitoring manager 74 acquires, from the inventory database 82, the planned data including the received inventory key (S428).

Then, on the basis of the planned data acquired in the processing in S428, the monitoring manager 74 performs monitoring setting appropriate to the monitoring policies indicated in the purchase service-requirement data (S429).

Then, the monitoring manager 74 outputs completion notification to the E2EO unit 62 (S430).

Then, the E2EO unit 62 outputs, to the security setter 76, the inventory key received in the processing in S403 (S431).

Then, the security setter 76 acquires, from the inventory database 82, the planned data including the received inventory key (S432).

Then, on the basis of the planned data acquired in the processing in S432, the security setter 76 performs security setting (S433).

Then, the security setter 76 outputs completion notification to the E2EO unit 62 (S434), and then the processing in the present processing example terminates.

Note that the present invention is not limited to the embodiment described above.

For example, the network service to be provided to the purchaser may be implemented with a virtualized network function (VNF) that is a virtual machine (VM)-based functional unit, based on a hypervisor-type or host-type virtualization technology, instead of a CNF that is a container-based functional unit. Here, in a case where a particular type of functional unit is to be deployed to an unused hardware resource (herein, for example, a free server), the host OS that is the infrastructure for the virtual-machine environment may be subjected to setup of system software appropriate to the particular type of functional unit.

For example, the role sharing between each function illustrated in Fig. 8 is not limited to that in Fig. 8. For example, the inventory manager 66 may perform part of the processing that the E2EO unit 62 performs. For example, the E2EO unit 62 may perform part of the processing that the inventory manager 66 performs.

In the present embodiment, the NOS 12 does not necessarily include the repository 80. Then, the bundle decompressor 60 may store the helm chart data and the container image data into a container manager 78. Then, the container manager 78 may deploy a container image stored in the container manager 78.

In the present embodiment, the NOS 12 does not necessarily include the bundle decompressor 60. For example, a bundle file may be brought into onboarding from an external server for file transfer.

### Example

On the basis of the fundamental technology above, an example of the present disclosure will be described. The description already given for the fundamental technology will be appropriately omitted and description different from the description for the fundamental technology will be mainly given below. Constituent elements the same as or corresponding to those in the fundamental technology are denoted with the same reference signs for description.

An outline of the example will be described. Yet another next generation (YANG) has been known, as a description language for setting items or the like, for use in the management protocol "NETCONF" for a network apparatus. A file in which the details of setting for a network apparatus are described in YANG is hereinafter referred to as a "YANG model". A YANG model can be regarded as data resulting from abstraction of the structure of a network apparatus and the setting items or set values for the network apparatus with YANG.

In the example, on the basis of a Yang model defining the details of setting for a network apparatus and data input by a customer (hereinafter, also referred to as a "user") who purchases or utilizes a network service, a user interface for setting the network apparatus is generated so as to be provided to the user. For example, this user interface includes a screen for new setting and a screen for setting change. Thus, a screen for setting that matches the latest details of setting to the network apparatus (e.g., the setting items or set values) can be efficiently generated so as to be provided to the user.

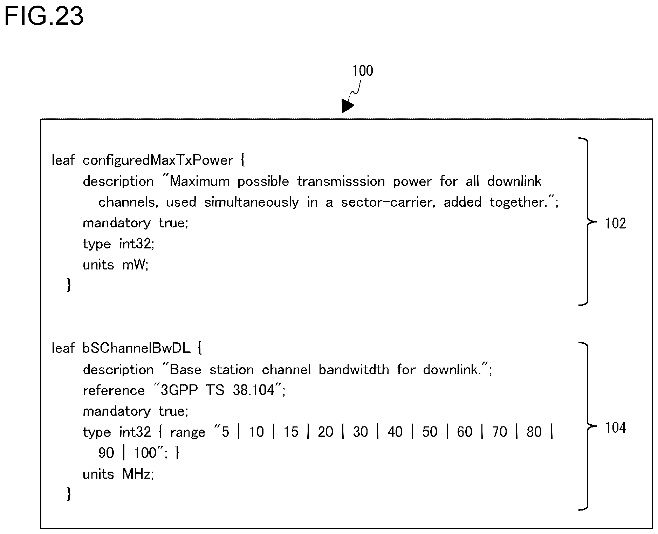

Fig. 23 illustrates exemplary data of a YANG model. The YANG model 100 in the figure includes the maximum transmission power (item 102) and the bandwidth of a base station for downlink (item 104) as setting items for a network apparatus. In each setting item, for example, designated can be a type, unit, or range for the set value, a mandatory option indicating that setting is mandatory, a default set value, and selectable candidates for the set value. The default set value can be regarded as a default statement and may be, for example, a recommended value.

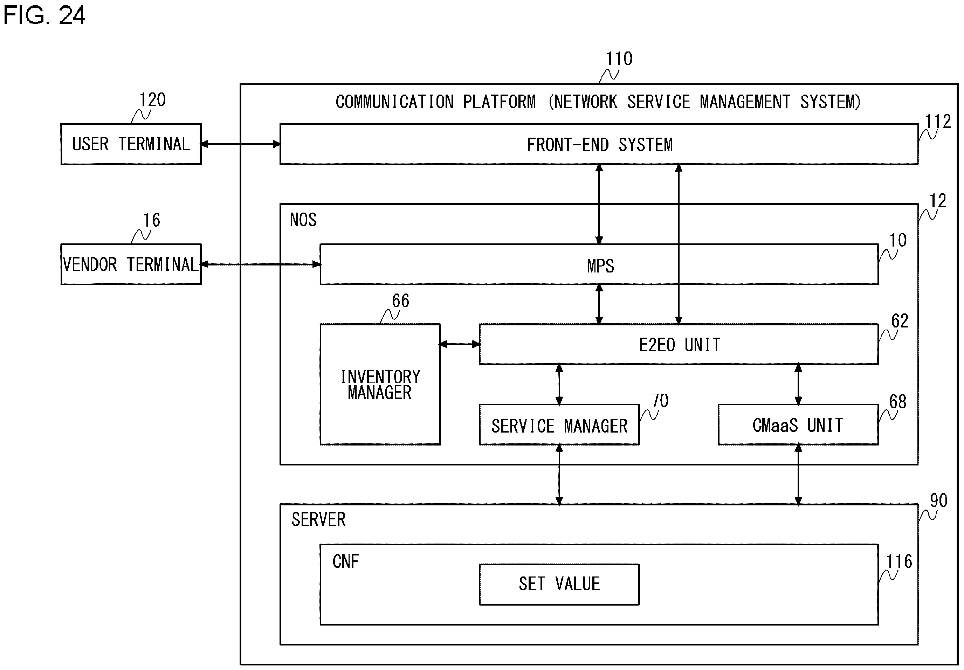

The example will be described in detail. Fig. 24 illustrates the configuration of a communication platform 110 according to the example. The communication platform 110 according to the example serves as an information processing system that constructs a network service on the communications infrastructure that a mobile network operator provides and manages the network service constructed on the communications infrastructure that the mobile network operator provides (namely, a computer system). The communication platform 110 can be regarded as a network service management system.

The communication platform 110 is not limited in physical configuration. For example, the function of the communication platform 110 may be achieved by a single apparatus. Alternatively, the function of the communication platform 110 may be distributed and disposed into a plurality of apparatuses and then may be achieved by the plurality of apparatuses in cooperation. The communication platform 110 is connected to a user terminal 120 and a vendor terminal 16 through a communication network, such as a LAN, a WAN, or the Internet. The user terminal 120 corresponds to the purchaser terminal 14 in the fundamental technology and serves as an information processing apparatus that a network service user operates (e.g., a MVNO).

Fig. 24 is a block diagram of the functional blocks of the communication platform 110. Each block in the block diagram of the present specification can be achieved on a hardware basis by an element, an electronic circuit, or a mechanical device, such as a computer processor, a CPU, or a memory, and can be achieved on a software basis by a computer program. Herein, the functional blocks are given so as to be achieved by cooperation between hardware and software. Therefore, it is apparent to persons skilled in the art that the functional blocks can be achieved by combinations of hardware and software.

The communication platform 110 includes a front-end system 112, a network operating system (NOS 12), and a server 90. The front-end system 112 serves as an information processing system that provides a user interface, such as a web page, to the user terminal 120 and receives a request for a network service from the user. The front-end system 112 may include at least part of the functions in the marketplace system (MPS 10) in the fundamental technology.

The server 90 serves as an information processing apparatus to have a CNF instance (CNF 116) deployed as a container-based functional unit that provides the function of a type of network apparatus (e.g., the function of a core network system 20 or the function of a base-station apparatus 22 in Fig. 1). As described in the fundamental technology, a CMaaS unit 68 in the NOS 12 sets, to the CNF 116, a value defining the function of the network apparatus (hereinafter, also referred to as a "set value") as a day1 parameter. Note that the communication platform 110 includes, in practice, a plurality of servers 90.

The NOS 12 includes a marketplace system (MPS 10), an E2EO unit 62, an inventory manager 66, a CMaaS unit 68, and a service manager 70. The inventory manager 66 includes the inventory database 82 in the fundamental technology and manages inventory information on the plurality of servers 90.

A configuration regarding new construction of a network service, in other words, a configuration regarding new setting of a network apparatus will be described. The CMaaS unit 68 serving as a storage stores, in association with a network service available to the user for purchase, a file defining the details of setting for a network apparatus for achieving the network service. The file has the details of setting for the network apparatus described in a predetermined data model language, and includes, in the example, a yet another next generation (YANG) model having the details of setting for the network apparatus described in YANG.

The front-end system 112 serving as a receptor receives the configuration of the network service designated by the user to purchase the network service. The CMaaS unit 68 and the front-end system 112 serving as a setting screen provider provide the user terminal 120 with a setting screen for the network apparatus, based on the details defined in the file and the configuration of the network service designated by the user. On the basis of the set value for the network apparatus input on the setting screen by the user, the CMaaS unit 68 serving as an apparatus setter performs setting to the network apparatus.

A configuration regarding setting change of a network service, in other words, a configuration regarding setting change of a network apparatus will be described. The CMaaS unit 68 serving as a first storage stores, in association with a network service available to the user for purchase, a file defining the details of setting for a network apparatus for achieving the network service (in the example, a file including a YANG model). The CMaaS unit 68 serving as a second storage stores the current set value for the network apparatus.

The front-end system 112 serving as a receptor receives, from the user terminal 120, a request for setting change of the network service. The CMaaS unit 68 and the front-end system 112 serving as a setting change screen provider provide the user terminal 120 with a setting change screen for the network apparatus, based on the details defined in the file and the current set value for the network apparatus. The CMaaS unit 68 serving as an apparatus setter makes a change in setting to the network apparatus, on the basis of the set value for the network apparatus input on the setting change screen by the user.

The operation of the communication platform 110 according to the example with the above configuration will be described.

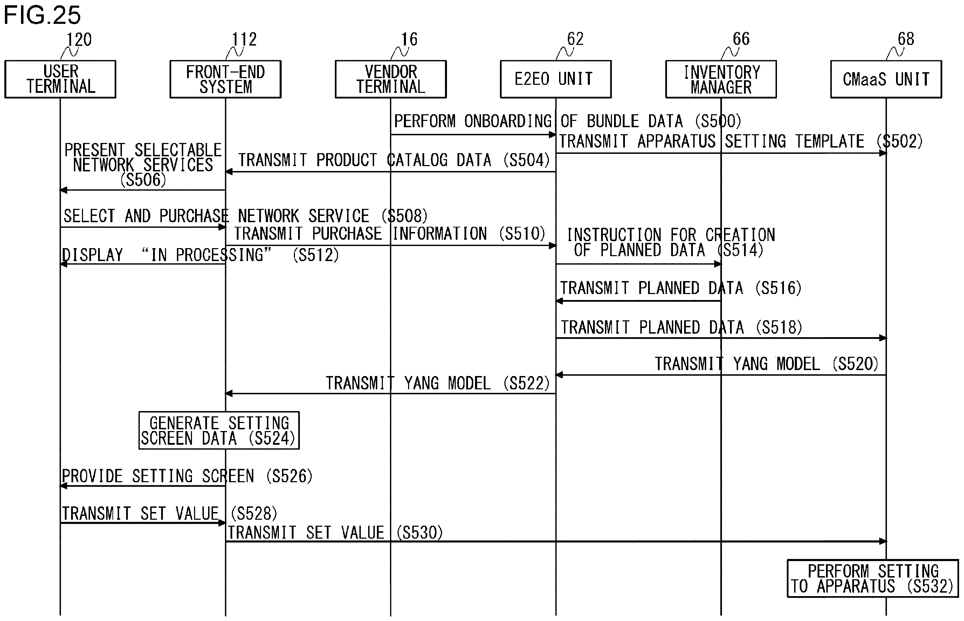

Fig. 25 is a sequence diagram of the operation of the communication platform 110. The figure illustrates an operation regarding new construction of a network service, in other words, an operation regarding new setting of a network apparatus.

In response to an operation from a person in charge of the vendor, the vendor terminal 16 uploads bundle data to the NOS 12 (E2EO unit 62) (S500). The E2EO unit 62 (bundle decompressor 60) transmit, to the CMaaS unit 68, an apparatus setting template (CM template data in the fundamental technology) generated on the basis of the bundle data (S502).

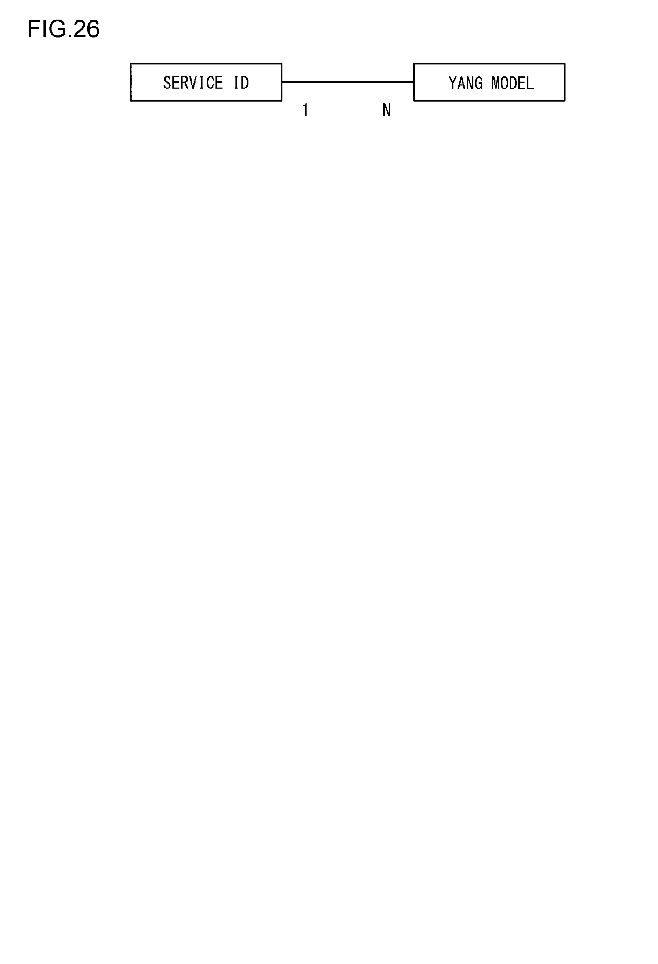

The apparatus setting template includes the ID of a network service and at least one YANG model defining the details of setting for a network apparatus for achieving the network service. When receiving the apparatus setting template, the CMaaS unit 68 stores service data in which the ID of the network service and the at least one YANG model indicated in the apparatus setting template link together. Fig. 26 schematically illustrates service data stored in the CMaaS unit 68. The figure illustrates the linkage between network service ID and YANG model. The linkage between network service ID and YANG model indicates one to N (N is an integer of one or more).

Referring back to Fig. 25, the E2EO unit 62 (bundle decompressor 60) transmits, to the front-end system 112, product catalog data generated on the basis of the bundle data (S504). In response to a request from the user terminal 120, the front-end system 112 displays, on the user terminal 120, a purchase screen indicating network services selectable by the user (namely, available for purchase) (e.g., the purchase screen in Fig. 2 or the service-requirement input screen in Fig. 3) (S506).

As already described with Figs. 2 and 3, the user selects a network service and inputs, on the purchase screen, purchase information including the type of the network service to be purchased and service requirements for the network service to be purchased. The user terminal 120 transmits, to the front-end system 112, the purchase information input on the purchase screen (S508). The purchase information includes the ID of the network service as the purchase target. The purchase information includes information regarding the configuration of the network service as the purchase target, such as information regarding the scale of the network service as the purchase target. For example, the information regarding the scale of the network service may include the number of subscribers or the target area in Fig. 3. The purchase information includes information regarding the type of the network service as the purchase target. For example, the information regarding the type of the network service may include any of the voice communication service, data communication service, and IoT service in Fig. 2.

The front-end system 112 transmits, to the E2EO unit 62, the purchase information (including the scale and type of the network service) received from the user terminal 120 (S510). In addition, the front-end system 112 transmits, to the user terminal 120, text data or image data indicating "in processing" and causes the user terminal 120 to display "in processing" (S512).

As already described in the fundamental technology, in accordance with a workflow designated in the bundle data (service catalog data), the E2EO unit 62 performs network construction processing. In the network construction processing, the E2EO unit 62 transmits, to the inventory manager 66, an instruction for creation of planned data (including the purchase information) (S514). The inventory manager 66 creates planned data, on the basis of the purchase information, and transmits the created planned data to the E2EO unit 62 (S516). The E2EO unit 62 transmits the planned data to the CMaaS unit 68 (S518). As a modification, the inventory manager 66 may directly transmit, to the CMaaS unit 68, the created planned data. The CMaaS unit 68 transmits, to the E2EO unit 62, data of the at least one YANG model corresponding to the network service indicated in the planned data (S520).

As partially described in the fundamental technology, the planned data includes information on resources for achieving the network service of which the scale or type is designated by the user, such as information indicating the number or type of network apparatuses to be set. In a case where the planned data indicates that a plurality of network apparatuses A should be set, the communication platform 110 according to the example generates, with a YANG model corresponding to the network apparatuses A, a number of user screens (setting screens and setting change screens) of which the number is identical to the number of network apparatuses A to be set. In a case where the planned data indicates that a plurality of types of network apparatuses (a network apparatus A and a network apparatus B) should be set, the communication platform 110 according to the example generates, with a YANG model corresponding to the network apparatus A, a setting screen or setting change screen for the network apparatus A. In addition, with a YANG model corresponding to the network apparatus B, a setting screen or setting change screen for the network apparatus B is generated.

For example, in a case where the planned data indicates that three network apparatuses A (network apparatuses A-1, A-2, and A-3) should be set, the CMaaS unit 68 transmits, to the E2EO unit 62, a YANG model for the network apparatus A as a YANG model corresponding to the network apparatus A-1, transmits, to the E2EO unit 62, a YANG model for the network apparatus A, the same as above, as a YANG model corresponding to the network apparatus A-2, and transmits, to the E2EO unit 62, a YANG model for the network apparatus A, the same as above, as a YANG model corresponding to the network apparatus A-3. As already described, data of each YANG model may include the default set value to the network apparatus. The E2EO unit 62 transmits, to the front-end system 112, the data of the at least one YANG model received from the CMaaS unit 68 (S522).

The front-end system 112 includes a parser that analyzes the details of a YANG model. On the basis of a result of analysis from the parser, the front-end system 112 generates data of a setting screen for the network apparatus for achieving the purchased network service (S524). For example, for a plurality of setting items defined by the YANG model, the front-end system 112 may dispose a screen element linked in advance with the type or unit of each setting item, to generate data of a setting screen. In a case where the YANG model includes the default set value to the network apparatus, the front-end system 112 generates data of a setting screen including the default set value.

The front-end system 112 generates a setting screen for details appropriate to the scale or type of the network service to be purchased. For example, the front-end system 112 receives, from the CMaaS unit 68, four YANG models based on the planned data (e.g., the YANG model corresponding to the network apparatus A-1, the YANG model corresponding to the network apparatus A-2, the YANG model corresponding to the network apparatus A-3, and the YANG model corresponding to the network apparatus B). In this case, on the basis of the four YANG models, the front-end system 112 may generate a setting screen including four set-value input areas corresponding to the four network apparatuses (A-1, A-2, A-3, and B). The first set-value input area may have the set value to the network apparatus A-1 input. The second set-value input area may have the set value to the network apparatus A-2 input. The third set-value input area may have the set value to the network apparatus A-3 input. The fourth set-value input area may have the set value to the network apparatus B input.

As above, the communication platform 110 according to the example provides the user with a setting screen for details appropriate to the scale or type of the network service designated on the purchase screen by the user. Thus, reliably and efficiently set can be a plurality of network apparatuses for achieving the network service of which the scale and type are designated by the user.

The front-end system 112 transmits, to the user terminal 120, the generated data of a setting screen and causes the user terminal 120 to display the setting screen (S526). Such data of a setting screen may be based on HTML data, and the web browser on the user terminal 120 may cause a predetermined display device to display the setting screen, on the basis of the HTML data provided from the front-end system 112.

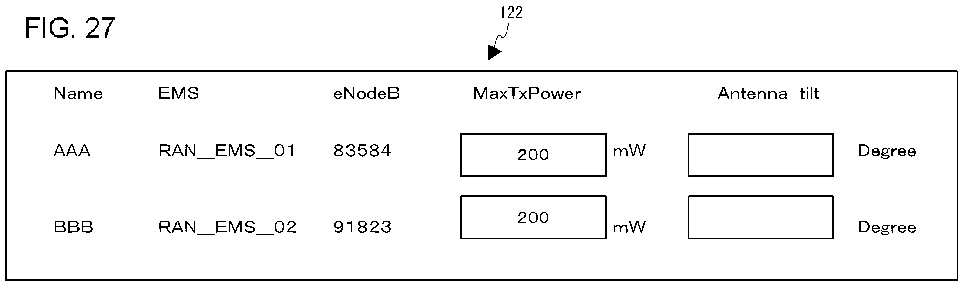

Fig. 27 illustrates an exemplary of setting screen. The setting screen 122 includes two setting items to a plurality of network apparatuses (e.g., an eNodeB "AAA" and an eNodeB "BBB") as setting targets. The first setting item corresponds to the maximum transmission power (MaxTxPower), and the second setting item corresponds to the antenna tilt angle (Antenna tilt). Each set-value input area for the maximum transmission power has the default value "200" set in the YANG model, set in advance. Although not illustrated in Fig. 27, as indicated in the item 104 in Fig. 23, in a case where a plurality of candidates is defined for the set value in the YANG model, a pull-down menu enabling selection of a particular set value from the plurality of candidates may be disposed in the setting screen 122.

Referring back to Fig. 25, the user terminal 120 transmits, to the front-end system 112, the set value input on the setting screen by the user (hereinafter, also referred to as a "user set value") (S528). The front-end system 112 transmits the user set value to the CMaaS unit 68 (S530). The user set value corresponds to the day1 parameter in the fundamental technology.

As already described in the fundamental technology, the E2EO unit 62 transmits the planned data to the service manager 70, and the service manager 70 deploys, in accordance with the planned data, the CNF 116 that provides the function of a network apparatus (e.g., an eNodeB) to the server 90. The service manager 70 notifies the inventory manager 66 of the ID of the deployed CNF 116 (namely, the ID of the network apparatus). The planned data transmitted from the E2EO unit 62 to the CMaaS unit 68 in S518 includes the ID of the CNF 116 (namely, the ID of the network apparatus as the setting target). When receiving the user set value transmitted from the front-end system 112, in accordance with the publicly known NETCONF, the CMaaS unit 68 inputs the user set value to the CNF 116 in the server 90 designated in the planned data (namely, the network apparatus as the setting target) (S532).

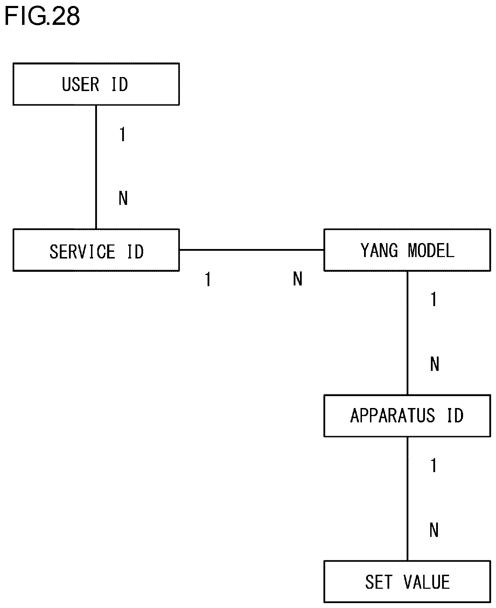

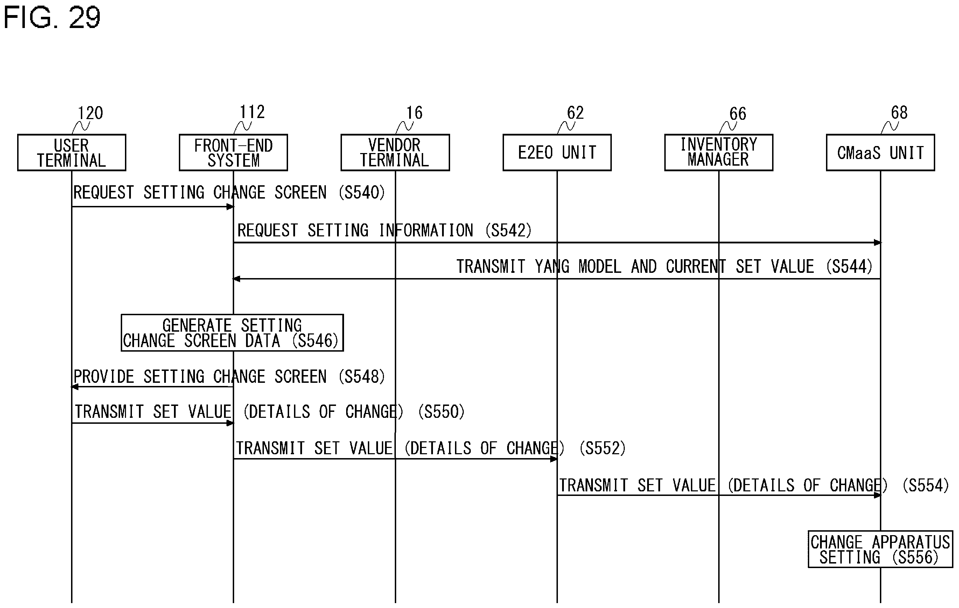

When receiving the user set value, the CMaaS unit 68 stores user data in which the ID of the user as the purchaser, the ID of the network service as the purchase target, the ID of the YANG model corresponding to the network service, the ID of the network apparatus (CNF 116) set with the YANG model, and the user set value are linked together. Fig. 28 schematically illustrates user data stored in the CMaaS unit 68. The linkage between user ID and network service ID indicates one to N (N is an integer of one or more). The linkage between network service ID and YANG model indicates one to N. The linkage between YANG model and network apparatus ID indicates one to N. The linkage between network apparatus ID and user set value indicates one to N. Processing relating to utilization of the user set value will be described below with Fig. 29.

The communication platform 110 according to the example generates, with a YANG model included in the bundle file uploaded from the vendor, a setting screen for a network apparatus and sets the set value input on the setting screen to the network apparatus (CNF 116 in the example). A YANG model for apparatus setting includes information necessary for generation of a user screen. Generation of a setting screen for a network apparatus due to such a YANG model requires no retention of information only for setting screen generation, enabling a reduction in the amount of necessary information.

In a case where the vendor, which provides the bundle file, upgrades the configuration of a network apparatus in version, the YANG model corresponding to the network apparatus is also updated. A configuration in which information for a setting screen is retained separately from a YANG model requires update of both of the YANG model and the information for a setting screen. However, the communication platform 110 according to the example generates a setting screen with a YANG model. Thus, no update of information for a setting screen is required, so that the YANG model is only required to be updated. Thus, a setting screen for parameters necessary for the network apparatus upgraded in version can be generated simply and easily without missing any necessary parameter.

The communication platform 110 according to the example provides the user with a setting screen including the default set value (e.g., the recommended value) set in the YANG model. Thus, the user can be assisted in determining and inputting a set value.

Fig. 29 is a sequence diagram of the operation of the communication platform 110. The figure illustrates an operation regarding setting change of a network service. Specifically, the figure illustrates an operation regarding utilization of a user set value stored in the CMaaS unit 68 and setting change of a network apparatus.

The user terminal 120 requests a setting change screen from the front-end system 112 (S540). The front-end system 112 requests the current setting information from the CMaaS unit 68 (S542). The request in S540 and the request in S542 each include the user ID and the network service ID of the change target. With reference to the user data stored in advance, the CMaaS unit 68 reads a YANG model and a user set value (namely, a current set value) linked with the user ID and the network service ID included in the request for the setting information. The CMaaS unit 68 transmits, to the front-end system 112, the read YANG model and user set value as the current setting information (S544).

On the basis of the YANG model and the user set value transmitted from the CMaaS unit 68, the front-end system 112 generates data of the setting change screen (S546). Specifically, the front-end system 112 generates data of the setting change screen including the user set value (namely, the current set value) to the network apparatus. The front-end system 112 transmits, to the user terminal 120, the generated data of the setting change screen and causes the user terminal 120 to display the setting change screen (S548). For example, the setting change screen may be the setting screen 122, illustrated in Fig. 27, having the current set value embedded in each of the set-value input area for the maximum transmission power and the set-value input area for the antenna tilt angle.

The user terminal 120 transmits, to the front-end system 112, a user set value (including the changed set value) input on the setting change screen by the user (S550). The front-end system 112 transmits the user set value to the E2EO unit 62 (S552). In accordance with a workflow for setting change defined in advance, the E2EO unit 62 transmits the user set value to the CMaaS unit 68 (S554). When receiving the user set value transmitted from the front-end system 112, in accordance with the publicly known NETCONF, the CMaaS unit 68 inputs the user set value to the CNF 116 in the server 90 (S556). That is, the CMaaS unit 68 feeds, into the CNF 116 in the server 90, the details of change input on the setting change screen by the user. In addition, the CMaaS unit 68 updates the existing user set value stored in advance with the user set value transmitted from the front-end system 112.

The communication platform 110 according to the example generates, with a YANG model included in the bundle data uploaded from the vendor and the current set value for the network apparatus, a setting change screen so as to be provided to the user. Thus, a setting change screen that matches the latest details of setting to the network apparatus (e.g., set values) can be efficiently generated, so that the user can be assisted in doing setting change work.

The example of the present invention has been described above. The example is exemplary, and thus it is apparent to persons skilled in the art that various modifications can be made by combinations of the constituent elements or combinations of the flows of processing and such modifications are to be included in the scope of the present invention.

Although not described in the example above, on the basis of the default set value defined in a YANG model, the front-end system 112 may set, into the set-value input area on the setting change screen, preferentially the current set value for the network apparatus. In a case where no set value has been set to part of the setting items for the network apparatus and the default set value is defined to the part of the setting items in the YANG model, the front-end system 112 may set, into the set-value input area on the setting change screen, the default set value defined in the YANG model.

Although not described in the example above, the front-end system 112 may dispose, on the setting change screen, a screen element for the user to change the scale of the network service. Changing the scale of the network service corresponds herein to an increase in scale, but may correspond to a reduction in scale. The front-end system 112 may notify the CMaaS unit 68 of the details of change for the scale of the network service. In response to the details of change for the scale of the network service and the current scale of the network service stored in the storage (e.g., the number of set network apparatuses), the CMaaS unit 68 may derive the number of network apparatuses to be newly set.

Alternatively, the front-end system 112 may notify the E2EO unit 62 (inventory manager 66) of the details of change for the scale of the network service. In response to the details of change for the scale of the network service, the E2EO unit 62 (inventory manager 66) may generate new planned data (e.g., the number of network apparatuses appropriate to the scale after change) and transmit the new planned data to the CMaaS unit 68. In response to the new planned data and the current scale of the network service stored in the storage (e.g., the number of set network apparatuses), the CMaaS unit 68 may derive the number of network apparatuses to be newly set.

As in S520 and S522 in Fig. 25, at least one YANG model corresponding to at least one network apparatus to be newly set may be transmitted from the CMaaS unit 68 to the E2EO unit 62 and then be transmitted from the E2EO unit 62 to the front-end system 112. On the basis of the at least one YANG model corresponding to the at least one network apparatus to be newly set, the front-end system 112 may generate a setting screen allowing input of a set value to the at least one network apparatus and cause the user terminal 120 to display the setting screen. After that, similarly to S528, S530, and S532 in Fig. 25, the set value input on the setting screen may be input to each network apparatus to be newly set.

Any combination of the fundamental technology, example, and modification described above is also effective as an embodiment of the present disclosure. A new embodiment caused due to any combination thereof includes the respective effects of the constituent elements in combination. It is apparent to persons skilled in the art that any function due to each constituent feature in the claims is achieved by independently each constituent element in the fundamental technology, example, and modification or is achieved by cooperation therebetween.

### [INDUSTRIAL APPLICABILITY]

The technology according to the present disclosure can be applied to a system that manages a network service.

### [REFERENCE SIGNS LIST]

12 NOS, 68 CMaaS unit, 90 server, 100 YANG model, 110 communication platform, 112 front-end system, 116 CNF, 120 user terminal, 122 setting screen

## Claims

1. A network service management system comprising:
a storage structured to store a file defining a detail of setting for a network apparatus for achieving a network service available to a customer for purchase, in association with the network service;
a receptor structured to receive a request for the network service from the customer;
a setting screen provider structured to provide a terminal of the customer with a setting screen for the network apparatus, based on the detail defined in the file; and
an apparatus setter structured to perform, based on a set value for the network apparatus input on the setting screen by the customer, setting to the network apparatus.

2. The network service management system according to claim 1, wherein
the receptor receives, as the request, a configuration of the network service designated by the customer to purchase the network service, and
the setting screen provider provides the terminal of the customer with the setting screen for the network apparatus, based on the detail defined in the file and the configuration of the network service designated by the customer.

3. The network service management system according to claim 2, wherein
the file includes a default set value to the network apparatus, and
the setting screen provider provides the terminal of the customer with the setting screen including the default set value to the network apparatus.

4. The network service management system according to any of claims 1 to 3, wherein
the storage further stores a current set value for the network apparatus,
the receptor receives, from the terminal of the customer, as the request, a request for setting change of the network service,
the setting screen provider provides the terminal of the customer with, as the setting screen, a setting change screen for the network apparatus, based on the detail defined in the file and the current set value for the network apparatus, and
the apparatus setter makes, based on a set value for the network apparatus input on the setting change screen by the customer, a change in setting to the network apparatus.

5. The network service management system according to claim 4, wherein
the setting screen provider provides the terminal of the customer with the setting change screen including the current set value for the network apparatus.

6. The network service management system according to any of claims 1 to 5, wherein
the receptor receives, as the request, information regarding a scale of the network service, and
the setting screen provider provides the terminal of the customer with the setting screen including a detail appropriate to the scale of the network service.

7. The network service management system according to claim 6, wherein
the information regarding the scale of the network service includes information indicating a number of network apparatuses to be set, and
the setting screen provider provides the terminal of the customer with the setting screen generated based on a number of the files corresponding to the number of network apparatuses to be set.

8. The network service management system according to claim 7, wherein
the setting screen includes a plurality of set-value input areas corresponding to a plurality of the network apparatuses based on a plurality of the files.

9. The network service management system according to any of claims 1 to 8, wherein
the file has the detail of setting for the network apparatus, described in a predetermined data model language.

10. The network service management system according to any of claims 1 to 9, wherein
the file includes a yet another next generation (YANG) model in which the detail of setting for the network apparatus is described in YANG.

11. A network service management method to be performed by a computer including a storage structured to store a file defining a detail of setting for a network apparatus for achieving a network service available to a customer for purchase, in association with the network service, the network service management method comprising:
a step of receiving a request for the network service from the customer;
a step of providing a terminal of the customer with a setting screen for the network apparatus, based on the detail defined in the file; and
a step of performing, based on a set value for the network apparatus input on the setting screen by the customer, setting to the network apparatus.
